# EUROPEAN PATENT APPLICATION

(11) **EP 4 765 570 A1**
(43) Date of publication of application: **24.06.2026**
(21) Application number: 25221837.5
(22) Date of filing: 09.12.2025
(51) Int. Cl.: H02J 7/40, H02J 7/50, H02J 7/61, H02J 7/63, H02J 7/64, H02J 7/65, H02J 7/60, H02J 7/96, H02J 7/90

(54) **CHARGE-DISCHARGE CONTROL CIRCUIT, CHARGE-DISCHARGE CONTROL DEVICE, AND BATTERY DEVICE**

(30) Priority: 17.12.2024 JP 2024220825; 28.10.2025 JP 2025181446
(71) Applicant: ABLIC Inc., Kitasaku-gun, Nagano 389-0293 (JP)
(72) Inventor: FUKUCHI, Shinya, Kitasaku-gun, Nagano, 389-0293 (JP); SANO, Kazuaki, Kitasaku-gun, Nagano, 389-0293 (JP)
(74) Representative: Winter, Brandl - Partnerschaft mbB

(57) **Abstract**

A battery device (10) includes a battery (11); a first predetermined state detection part detecting a first predetermined state regarding a first cell; a first logic circuit performing first control based on detection result of first predetermined state detection part; a second predetermined state detection part detecting a second predetermined state regarding a second cell (111B); a charger connection detection part detecting presence or absence of connection between battery and a charger; and a second logic circuit (62B) performing second control based on detection result of second predetermined state detection part, detection result of charger connection detection part, and first notification from first logic circuit regarding first predetermined state. The first and second predetermined states are over-charge state or overdischarge state, and second logic circuit masks first notification from first logic circuit and performs second control in response to detection result of charger connection detection part satisfying a predetermined condition.

## Description

### BACKGROUND

### Technical Field

The present invention relates to a charge-discharge control circuit, a charge-discharge control device, and a battery device.

### Related Art

In a circuit including a battery (battery pack) in which a plurality of cells (unit batteries) are connected in series, a circuit that cascade connects a plurality of protection ICs (Integrated Circuits) is known (see Patent Document 1).

### Citation List

### Patent Document

[Patent Document 1] Japanese Patent Application Laid-Open Publication No. 2005-117780

### SUMMARY

### Technical Problem

However, in the conventional circuit as described above, in the case of performing over-charge state release and over-discharge state release during cascade communication of a plurality of cells, a dedicated terminal for communicating the state of an external voltage input terminal, which is a terminal of a voltage VM, between a plurality of protection ICs was necessary.

Thus, in the conventional circuit as described above, since pads increase, chip size and package pin count may increase.

The present invention is made in consideration of such circumstances, and an object is to provide a charge-discharge control circuit, a charge-discharge control device, and a battery device that can suppress circuit scale in the case where a plurality of protection ICs are cascade connected. Solution to Problem

One aspect is a charge-discharge control circuit including: a battery in which a plurality of cells including a first cell and a second cell are connected in series; a first predetermined state detection part that detects a first predetermined state with respect to the first cell; a first logic circuit that performs a first control based on a detection result of the first predetermined state detection part; a second predetermined state detection part that detects a second predetermined state with respect to the second cell; a charger connection detection part that detects presence or absence of connection between the battery and a charger; and a second logic circuit that performs a second control based on a detection result of the second predetermined state detection part, a detection result of the charger connection detection part, and a first notification from the first logic circuit regarding the first predetermined state. The first predetermined state and the second predetermined state are an over-charge state or an over-discharge state, and the second logic circuit masks the first notification from the first logic circuit and performs the second control in response to the detection result of the charger connection detection part satisfying a predetermined condition. Effects

According to the present invention, in a charge-discharge control circuit, a charge-discharge control device, and a battery device, circuit scale can be suppressed in the case where a plurality of protection ICs are cascade connected.

### BRIEF DESCRIPTION OF THE DRAWINGS

FIG. 1A is a diagram illustrating a configuration example of a charge-discharge control circuit, a charge-discharge control device, and a battery device according to an embodiment, and a first state of the battery device.
FIG. 1B is a diagram illustrating a configuration example of a charge-discharge control circuit, a charge-discharge control device, and a battery device according to an embodiment, and a first state of the battery device.
FIG. 2A is a diagram illustrating a second state of the battery device according to the embodiment.
FIG. 2B is a diagram illustrating a second state of the battery device according to the embodiment.
FIG. 3A is a diagram illustrating a third state of the battery device according to the embodiment.
FIG. 3B is a diagram illustrating a third state of the battery device according to the embodiment.
FIG. 4A is a diagram illustrating a fourth state of the battery device according to the embodiment.
FIG. 4B is a diagram illustrating a fourth state of the battery device according to the embodiment.
FIG. 5 is a diagram illustrating an example of a timing chart related to over-charge according to the embodiment.
FIG. 6 is a diagram illustrating an example of a timing chart related to over-discharge according to the embodiment.
FIG. 7A is a diagram illustrating a configuration example of a charge-discharge control circuit, a charge-discharge control device, and a battery device according to a comparative example, and a first state of the battery device.
FIG. 7B is a diagram illustrating a configuration example of a charge-discharge control circuit, a charge-discharge control device, and a battery device according to a comparative example, and a first state of the battery device.
FIG. 8A is a diagram illustrating a second state of the battery device according to the comparative example.
FIG. 8B is a diagram illustrating a second state of the battery device according to the comparative example.
FIG. 9A is a diagram illustrating a third state of the battery device according to the comparative example.
FIG. 9B is a diagram illustrating a third state of the battery device according to the comparative example.
FIG. 10A is a diagram illustrating a fourth state of the battery device according to the comparative example.
FIG. 10B is a diagram illustrating a fourth state of the battery device according to the comparative example.
FIG. 11A is a diagram illustrating a fifth state of the battery device according to the comparative example.
FIG. 11B is a diagram illustrating a fifth state of the battery device according to the comparative example.
FIG. 12A is a diagram illustrating a sixth state of the battery device according to the comparative example.
FIG. 12B is a diagram illustrating a sixth state of the battery device according to the comparative example.
FIG. 13 is a diagram illustrating an example of a timing chart related to over-charge according to the comparative example.
FIG. 14 is a diagram illustrating an example of a timing chart related to over-discharge according to the comparative example.
FIG. 15 is a diagram illustrating over-charge state release and over-discharge state release according to a reference example.

### DESCRIPTION OF THE EMBODIMENTS

Hereinafter, embodiments of the present invention will be described with reference to the drawings.

### [Battery Device]

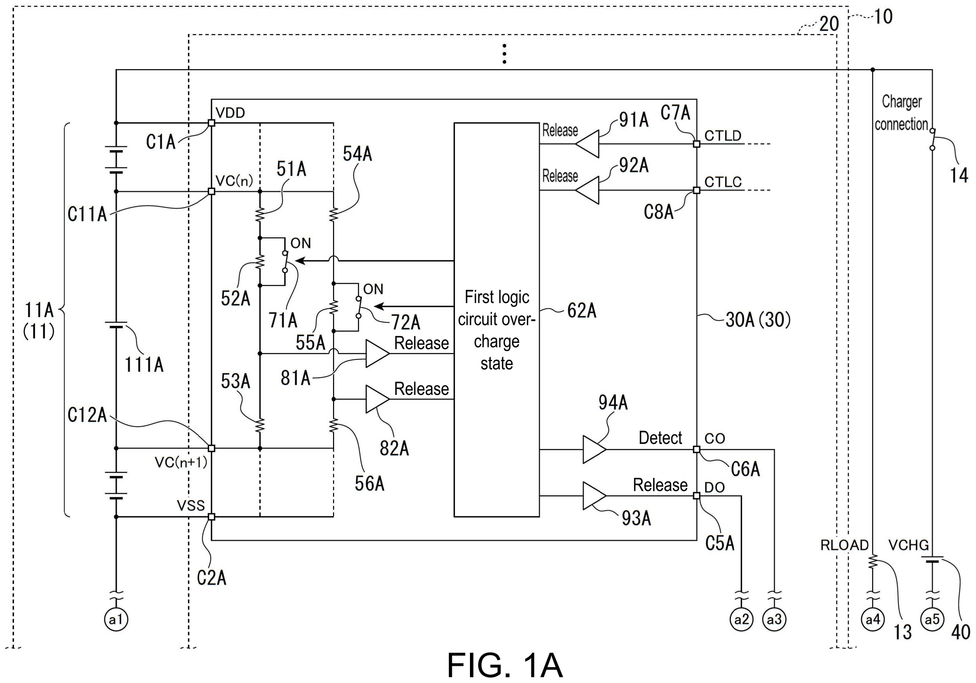

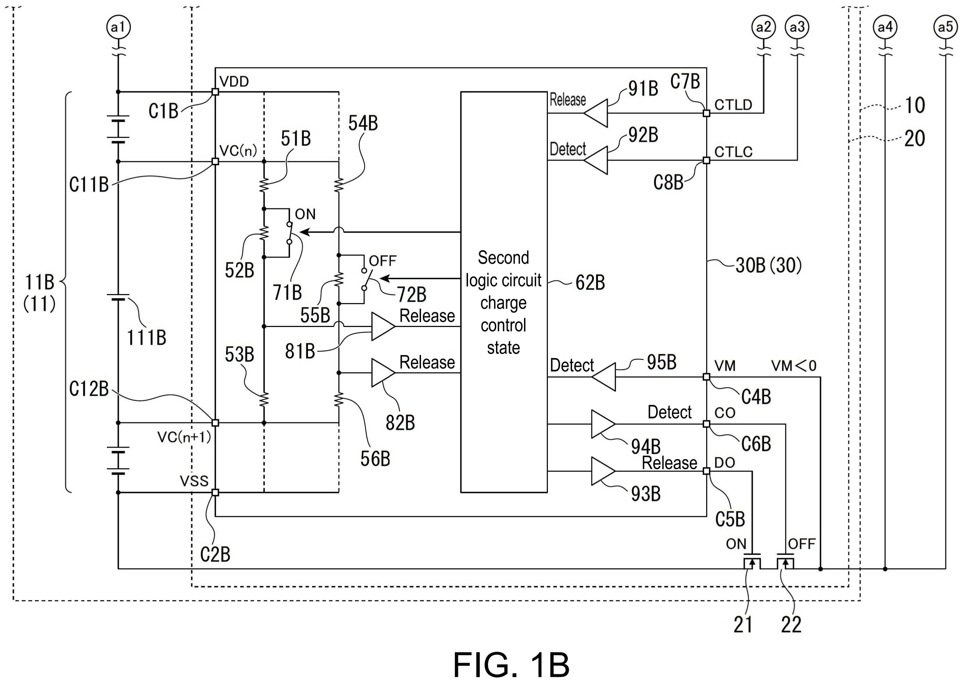

FIG. 1A and FIG. 1B are diagrams illustrating configuration examples of a charge-discharge control circuit 30, a charge-discharge control device 20, and a battery device 10 according to the embodiment, and a first state of the battery device 10.

The battery device 10 includes a charge-discharge control device 20 and a battery 11.

The charge-discharge control device 20 includes a charge-discharge control circuit 30, a discharge control FET (Field Effect Transistor) 21, and a charge control FET 22.

Also, FIG. 1A illustrates a short circuit load 13 (RLOAD), a switch 14, and a charger 40.

Note that for convenience of illustration, the battery device 10 is illustrated divided into FIG. 1A and FIG. 1B, but these are an integrated device.

Each of the lines with reference signs a1 to a5 illustrated in FIG. 1A and each of the lines with the reference signs a1 to a5 illustrated in FIG. 1B are connected.

The charge-discharge control device 20 controls charge-discharge of the battery 11.

A discharge control FET 21 performs control of discharge.

The charge control FET 22 performs control of charge.

Here, in the present embodiment, the charge-discharge control circuit 30 includes a plurality of stages of charge-discharge control circuits.

In the present embodiment, the charge-discharge control circuit 30 includes three or more stages of charge-discharge control circuits, but in the examples of FIG. 1A and FIG. 1B, for simplification of illustration, the lowermost charge-discharge control circuit 30B and a charge-discharge control circuit 30A that is one stage above it are illustrated.

The charge-discharge control circuit (not illustrated) on an upper stage than the charge-discharge control circuit 30A has a circuit configuration similar to the charge-discharge control circuit 30A, but the uppermost charge-discharge control circuit (not illustrated) does not include a discharge control signal detection circuit and a charge control signal detection circuit (that is, a communication circuit on the stage above it).

However, the charge-discharge control circuit 30 may have a configuration that includes two stages of charge-discharge control circuits such as the charge-discharge control circuit 30A and the charge-discharge control circuit 30B.

Here, in the present embodiment, regarding the battery 11, the portion corresponding to the charge-discharge control circuit 30A is illustrated as a battery part 11A, and the portion corresponding to the charge-discharge control circuit 30B is illustrated as battery part 11B.

In the present embodiment, for convenience of description, the charge-discharge control circuit 30A is called the upper IC, and the charge-discharge control circuit 30B is called the lower IC.

In the present embodiment, these ICs are an example of a plurality of protection ICs.

The charge-discharge control circuit 30A includes over-discharge detection ladder resistors 51A to 53A, a switch 71A, over-charge detection ladder resistors 54A to 56A, a switch 72A, an over-discharge detection comparator 81A, an over-charge detection comparator 82A, a first logic circuit 62A, a discharge control signal detection circuit 91A, a charge control signal detection circuit 92A, a discharge control signal output circuit 93A, and a charge control signal output circuit 94A.

The battery part 11A has a plurality of cells connected in series.

In the example of FIG. 1A, to simplify the illustration, regarding one first cell 111A among the plurality of cells that the battery part 11A has, the over-discharge detection ladder resistors 51A to 53A, the switch 71A, the over-charge detection ladder resistors 54A to 56A, the switch 72A, the over-discharge detection comparator 81A, and the over-charge detection comparator 82A are illustrated, but similar circuits are also provided for other cells that the battery part 11A has.

Here, in the present embodiment, an operation example of the first logic circuit 62A is described focusing on one first cell 111A, but similar circuit configurations may be adopted for other cells and control by the first logic circuit 62A may be performed.

The charge-discharge control circuit 30A includes a power input terminal C1A which is a terminal of a voltage VDD, a power input terminal C2A which is a terminal of a voltage VSS, a voltage connection terminal C11A which is a terminal of voltage VC(n), a voltage connection terminal C12A which is a terminal of voltage VC(n+1), a discharge control FET gate connection terminal C5A which is a terminal of a voltage VDO, a charge control FET gate connection terminal C6A which is a terminal of a voltage VCO, a DO terminal output control terminal C7A which is a terminal of a voltage VCTLD, and a CO terminal output control terminal C8A which is a terminal of a voltage VCTLC.

Here, in the charge-discharge control circuit 30A, voltage VC(n) represents the positive electrode voltage of the n^{th} stage cell (n is an integer of 1 or more) (in the examples of FIG. 1A and FIG. 1B, the first cell 111A), and represents the negative electrode voltage of the (n-1)^{th} stage cell.

Also, voltage VC(n+1) represents the positive electrode voltage of the (n+1)^{th} stage cell, and represents the negative electrode voltage of the n^{th} stage cell (in the example of FIG. 1A, the first cell 111A).

Moreover, for the first stage cell (in the case of n=1) and the final stage cell (in the case of n being maximum), there is no adjacent cell.

The charge-discharge control circuit 30B includes over-discharge detection ladder resistors 51B to 53B, a switch 71B, over-charge detection ladder resistors 54B to 56B, a switch 72B, an over-discharge detection comparator 81B, an over-charge detection comparator 82B, a second logic circuit 62B, a discharge control signal detection circuit 91B, a charge control signal detection circuit 92B, a discharge control signal output circuit 93B, a charge control signal output circuit 94B, and a charger connection detection circuit 95B.

The battery part 11B has a plurality of cells connected in series.

In the example of FIG. 1B, to simplify the illustration, the over-discharge detection ladder resistors 51B to 53B, the switch 71B, the over-charge detection ladder resistors 54B to 56B, the switch 72B, the over-discharge detection comparator 81B, and the over-charge detection comparator 82B are illustrated for one second cell 111B among the plurality of cells that the battery part 11B has, but similar circuits are provided for other cells that the battery part 11B has.

Here, in the present embodiment, an operation example of the second logic circuit 62B is described focusing on one second cell 111B, but for example, similar circuit configurations may be adopted for other cells and control by the second logic circuit 62B may be performed.

The charge-discharge control circuit 30B includes a power input terminal C1B which is a terminal of the voltage VDD, a power input terminal C2B which is a terminal of the voltage VSS, a voltage connection terminal C11B which is a terminal of voltage VC(n), a voltage connection terminal C12B which is a terminal of voltage VC(n+1), a discharge control FET gate connection terminal C5B which is a terminal of the voltage VDO, a charge control FET gate connection terminal C6B which is a terminal of the voltage VCO, a DO terminal output control terminal C7B which is a terminal of the voltage VCTLD, a CO terminal output control terminal C8B which is a terminal of the voltage VCTLC, and an external voltage input terminal C4B which is a terminal of the voltage VM.

Here, in the charge-discharge control circuit 30B, voltage VC(n) represents the positive electrode voltage of the n^{th} stage cell (n is an integer of 1 or more) (in the example of FIG. 1B, the second cell 111B), and represents the negative electrode voltage of the (n-1)^{th} stage cell.

Also, voltage VC(n+1) represents the positive electrode voltage of the (n+1)^{th} stage cell, and represents the negative electrode voltage of the n^{th} stage cell (in the example of FIG. 1B, the second cell 111B).

Moreover, for the first stage cell (in the case of n=1) and the final stage cell (in the case of n being maximum), there is no adjacent cell.

### <Circuit connection relationship etc.>

Between the positive electrode side and negative electrode side of the battery 11, a switch 14, a charger 40, a charge control FET 22, and a discharge control FET 21 are connected in order from the positive electrode side toward the negative electrode side.

Also, in parallel with the switch 14 and the charger 40, a short circuit load 13 (RLOAD), which is a short circuit resistor, is connected between the positive electrode side and the negative electrode side of the battery 11.

Here, a source (S) of the charge control FET 22 is connected to the negative electrode of the charger 40, a drain (D) of the charge control FET 22 is connected to a drain (D) of the discharge control FET 21, and a source (S) of the discharge control FET 21 is connected to the negative electrode of the battery 11.

A gate (G) of the discharge control FET 21 and the discharge control FET gate connection terminal C5B are connected.

A gate (G) of the charge control FET 22 and the charge control FET gate connection terminal C6B are connected.

A point between the charger 40 and the charge control FET 22 is connected to the external voltage input terminal C4B.

The connection relationship etc. of the circuit relating to the charge-discharge control circuit 30A will be described.

Between the voltage connection terminal C11A on the power input terminal C1A side and the voltage connection terminal C12A on the power input terminal C2A side, the over-discharge detection ladder resistor 51A, the over-discharge detection ladder resistor 52A, and the over-discharge detection ladder resistor 53A are connected in order from the positive electrode side toward the negative electrode side, and the over-charge detection ladder resistor 54A, the over-charge detection ladder resistor 55A, and the over-charge detection ladder resistor 56A are connected in parallel therewith.

The switch 71A is connected in parallel with the over-discharge detection ladder resistor 52A.

The switch 72A is connected in parallel with the over-charge detection ladder resistor 55A.

The first logic circuit 62A controls the switch 71A and the switch 72A.

A point between the over-discharge detection ladder resistor 52A and the over-discharge detection ladder resistor 53A is connected to an input port of the over-discharge detection comparator 81A.

An output port of the over-discharge detection comparator 81A and one input port of the first logic circuit 62A are connected.

A point between the over-charge detection ladder resistor 55A and the over-charge detection ladder resistor 56A is connected to an input port of the over-charge detection comparator 82A.

An output port of the over-charge detection comparator 82A and one input port of the first logic circuit 62A are connected.

The DO terminal output control terminal C7A and an input port of the discharge control signal detection circuit 91A are connected.

An output port of the discharge control signal detection circuit 91A and one input port of the first logic circuit 62A are connected.

The CO terminal output control terminal C8A and an input port of the charge control signal detection circuit 92A are connected.

An output port of the charge control signal detection circuit 92A and one input port of the first logic circuit 62A are connected.

An input port of the discharge control signal output circuit 93A and one output port of the first logic circuit 62A are connected.

An output port of the discharge control signal output circuit 93A and the discharge control FET gate connection terminal C5A are connected.

An input port of the charge control signal output circuit 94A and one output port of the first logic circuit 62A are connected.

An output port of the charge control signal output circuit 94A and the charge control FET gate connection terminal C6A are connected.

The connection relationship between the charge-discharge control circuit 30A and the charge-discharge control circuit 30B will be described.

The discharge control FET gate connection terminal C5A of the charge-discharge control circuit 30A and the DO terminal output control terminal C7B of the charge-discharge control circuit 30B are connected.

The charge control FET gate connection terminal C6A of the charge-discharge control circuit 30A and the CO terminal output control terminal C8B of the charge-discharge control circuit 30B are connected.

The circuit connection relationship etc. related to the charge-discharge control circuit 30B will be described.

Between the voltage connection terminal C11B on the power input terminal C1B side and the voltage connection terminal C12B on the power input terminal C2B side, , the over-discharge detection ladder resistor 51B, the over-discharge detection ladder resistor 52B, and the over-discharge detection ladder resistor 53B are connected in order from the positive electrode side toward the negative electrode side, and the over-charge detection ladder resistor 54B, the over-charge detection ladder resistor 55B, and the over-charge detection ladder resistor 56B are connected in parallel therewith.

A switch 71B is connected in parallel with the over-discharge detection ladder resistor 52B.

A switch 72B is connected in parallel with the over-charge detection ladder resistor 55B.

The second logic circuit 62B controls the switch 71B and the switch 72B.

A point between the over-discharge detection ladder resistor 52B and the over-discharge detection ladder resistor 53B is connected to an input port of the over-discharge detection comparator 81B.

An output port of the over-discharge detection comparator 81B and one input port of the second logic circuit 62B are connected.

A point between the over-charge detection ladder resistor 55B and the over-charge detection ladder resistor 56B is connected to an input port of the over-charge detection comparator 82B.

An output port of the over-charge detection comparator 82B and one input port of the second logic circuit 62B are connected.

The DO terminal output control terminal C7B and an input port of the discharge control signal detection circuit 91B are connected.

An output port of the discharge control signal detection circuit 91B and one input port of the second logic circuit 62B are connected.

The CO terminal output control terminal C8B and an input port of the charge control signal detection circuit 92B are connected.

An output port of the charge control signal detection circuit 92B and one input port of the second logic circuit 62B are connected.

An input port of the discharge control signal output circuit 93B and one output port of the second logic circuit 62B are connected.

An output port of the discharge control signal output circuit 93B and the discharge control FET gate connection terminal C5B are connected.

An input port of the charge control signal output circuit 94B and one output port of the second logic circuit 62B are connected.

An output port of the charge control signal output circuit 94B and the charge control FET gate connection terminal C6B are connected.

An input port of the charger connection detection circuit 95B and the external voltage input terminal C4B are connected.

An output port of the charger connection detection circuit 95B and one input port of the second logic circuit 62B are connected.

### <First state: description of over-charge state release during cascade communication>

FIG. 1A and FIG. 1B show a first state of the battery device 10.

The switch 14 is controlled to a closed (SHORT) state. As a result, the charger 40 is connected to the battery device 10.

The state of the charge-discharge control circuit 30A is described.

In the normal state, a voltage VBATn of the first cell 111A is higher than an over-charge release voltage VCL and lower than an over-charge detection voltage VCU.

Here, in the case where the voltage VBATn of the first cell 111A exceeds the over-charge detection voltage VCU, the first logic circuit 62A is in an over-charge state.

The output port of the over-discharge detection comparator 81A is in a release state.

The output port of the over-charge detection comparator 82A is in a release state.

The output port of the discharge control signal detection circuit 91A is in a release state.

The output port of the charge control signal detection circuit 92A is in a release state.

The first logic circuit 62A controls the switch 71A to an ON state by the over-discharge state release signal.

The first logic circuit 62A controls the switch 72A to an ON state by the over-charge state release signal.

The output port of the discharge control signal output circuit 93A is in a release state by the first logic circuit 62A.

The output port of the charge control signal output circuit 94A is in a detection state by the first logic circuit 62A and outputs a charge control signal.

The state of the charge-discharge control circuit 30B is described.

The voltage VM is lower than 0[V] (VM<0). As a result, the output port of the charger connection detection circuit 95B is in a detection state.

The voltage VBATn of the second cell 111B is higher than an over-discharge detection voltage VDL and lower than the over-charge release voltage VCL.

The output port of the over-discharge detection comparator 81B is in a release state.

The output port of the over-charge detection comparator 82B is in a release state.

The output port of the discharge control signal detection circuit 91B is in a release state.

The output port of the charge control signal detection circuit 92B is in a detection state.

As a result, the second logic circuit 62B is in a charge control state.

The second logic circuit 62B controls the switch 71B to an ON state by the over-discharge state release signal.

The second logic circuit 62B controls the switch 72B to an OFF state by the over-charge state release signal.

The output port of the discharge control signal output circuit 93B is in a release state by the second logic circuit 62B.

As a result, the discharge control FET 21 is controlled to an ON state.

The output port of the charge control signal output circuit 94B is in a detection state by the second logic circuit 62B and outputs a charge control signal.

As a result, the charge control FET 22 is controlled to an OFF state.

In this way, the upper IC (charge-discharge control circuit 30A) transitions to an over-charge state in the case of the voltage VBATn of the first cell 111A connected to the upper IC exceeding the over-charge detection voltage VCU.

In the lower IC (charge-discharge control circuit 30B), a detection signal is received by the CO terminal output control terminal C8B of the lower IC, and the second logic circuit 62B transitions to a charge control state. As a result, the charge control FET 22 is turned off by the second logic circuit 62B.

Due to the charge stop, the voltage VBATn of the first cell 111A decreases slightly and becomes less than the over-charge detection voltage VCU.

### <Second state: description of over-charge state release during cascade communication>

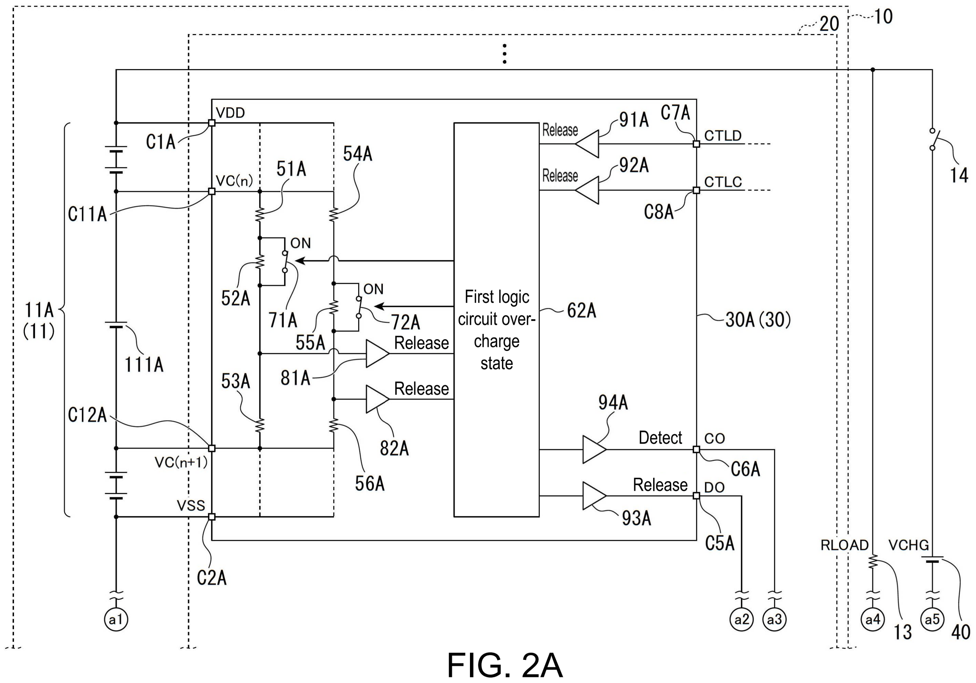

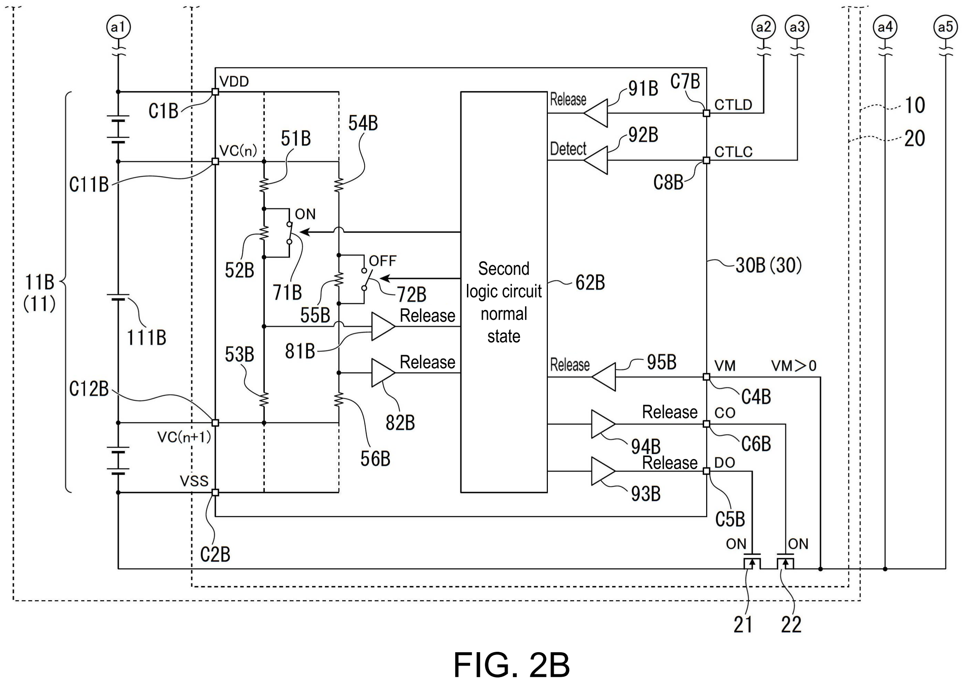

FIG. 2A and FIG. 2B are diagrams illustrating a second state of the battery device 10 according to the embodiment.

Changes from the first state will be described.

The switch 14 is controlled to an open (OPEN) state. As a result, the charger 40 is not connected to the battery device 10 (disconnected state).

The voltage VM becomes higher than 0[V] (VM>0). As a result, the output port of the charger connection detection circuit 95B is in a release state.

The second logic circuit 62B is in a normal state.

The output port of the charge control signal output circuit 94B is in a release state by the second logic circuit 62B.

As a result, the charge control FET 22 is controlled to an ON state.

In this way, the voltage VM increases by removing the charger 40.

As a result, the charger connection detection circuit 95B of the lower IC outputs a release signal. Accordingly, the second logic circuit 62B masks the detection signal from the output port of the charge control signal detection circuit 92B and transitions to a normal state. Then, the second logic circuit 62B turns on the charge control FET 22.

Here, the second logic circuit 62B maintains masking the detection signal of the CO terminal output control terminal C8B in the case of the voltage VM being higher than 0[V] (in the case where the charger 40 is open).

Moreover, in the upper IC, the over-charge state of the first logic circuit 62A is maintained.

That is, in the examples of the first state and the second state, in the upper IC, for example, after the power is turned on, the over-charge state is detected and notified to the lower IC, and then the over-charge state is maintained.

In the present embodiment, masking is performed by software in the lower IC such that, for example, a complex circuit is not required.

### <Third state: description of over-discharge state release during cascade communication>

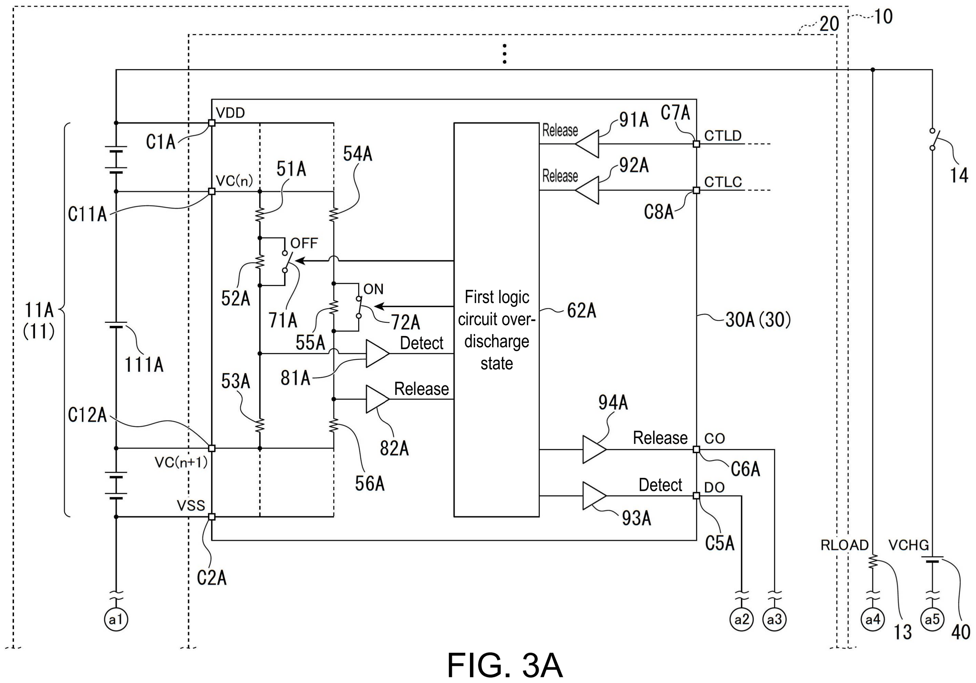

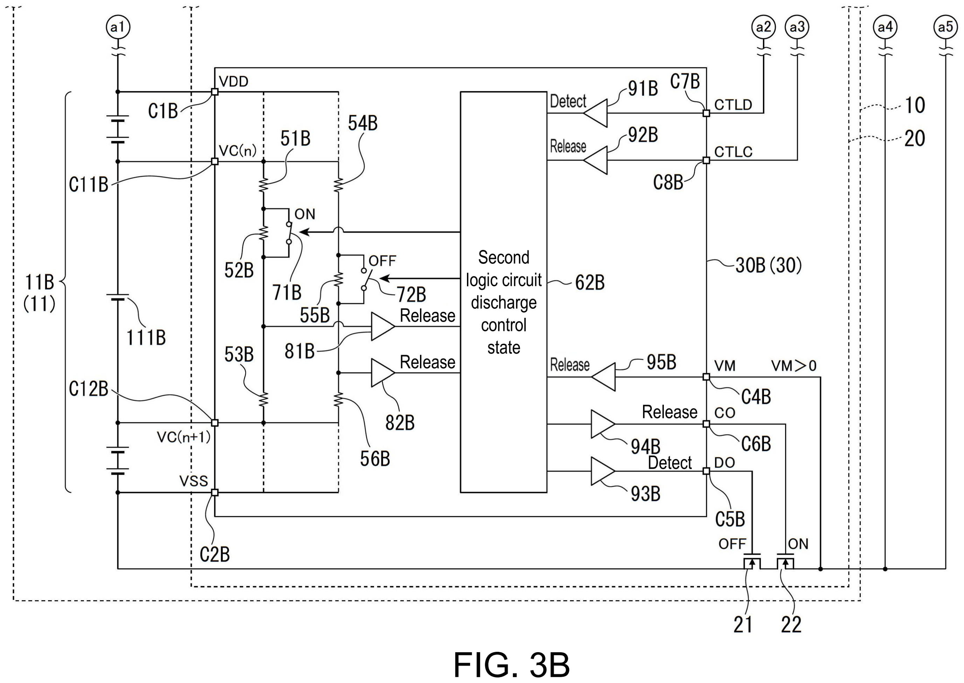

FIG. 3A and FIG. 3B are diagrams illustrating a third state of the battery device 10 according to the embodiment.

The switch 14 is controlled to an open (OPEN) state. As a result, the charger 40 is in a state of not being connected to the battery device 10 (disconnected state).

The state of the charge-discharge control circuit 30A will be described.

In the normal state, the voltage VBATn of the first cell 111A is higher than the over-discharge detection voltage VDL and lower than an over-discharge release voltage VDU.

Here, in the case where the voltage VBATn of the first cell 111A becomes less than the over-discharge detection voltage VDL, the first logic circuit 62A is in an over-discharge state.

The output port of the over-discharge detection comparator 81A is in a detection state.

The output port of the over-charge detection comparator 82A is in a release state.

The output port of the discharge control signal detection circuit 91A is in a release state.

The output port of the charge control signal detection circuit 92A is in a release state.

The first logic circuit 62A controls the switch 71A to an OFF state by the over-discharge state release signal.

The first logic circuit 62A controls the switch 72A to an ON state by the over-charge state release signal.

The output port of the discharge control signal output circuit 93A is in a detection state by the first logic circuit 62A, and outputs a discharge control signal.

The output port of the charge control signal output circuit 94A is in a release state by the first logic circuit 62A.

The state of the charge-discharge control circuit 30B is described.

The voltage VM is higher than 0[V] (VM>0). As a result, the output port of the charger connection detection circuit 95B is in a release state.

The voltage VBATn of the second cell 111B is higher than the over-discharge detection voltage VDL and lower than the over-charge release voltage VCL.

The output port of the over-discharge detection comparator 81B is in a release state.

The output port of the over-charge detection comparator 82B is in a release state.

The output port of the discharge control signal detection circuit 91B is in a detection state.

The output port of the charge control signal detection circuit 92B is in a release state.

The second logic circuit 62B is in a discharge control state.

The second logic circuit 62B controls the switch 71B to an ON state by the over-discharge state release signal.

The second logic circuit 62B controls the switch 72B to an OFF state by the over-charge state release signal.

The output port of the discharge control signal output circuit 93B is in a detection state by the second logic circuit 62B and outputs a discharge control signal.

As a result, the discharge control FET 21 is controlled to an OFF state.

The output port of the charge control signal output circuit 94B is in a release state by the second logic circuit 62B.

As a result, the charge control FET 22 is controlled to an ON state.

In this way, in the case of the first cell 111A connected to the upper IC falling below the over-discharge detection voltage VDL, the first logic circuit 62A transitions to an over-discharge state.

A detection signal is received by the DO terminal output control terminal C7B of the lower IC, and the second logic circuit 62B transitions to a discharge control state. As a result, the discharge control FET 21 is turned off by the second logic circuit 62B.

Due to the discharge stop, the voltage VBATn of the first cell 111A rises slightly and becomes higher than the over-discharge release voltage VDU.

### <Fourth state: description of over-discharge state release during cascade communication>

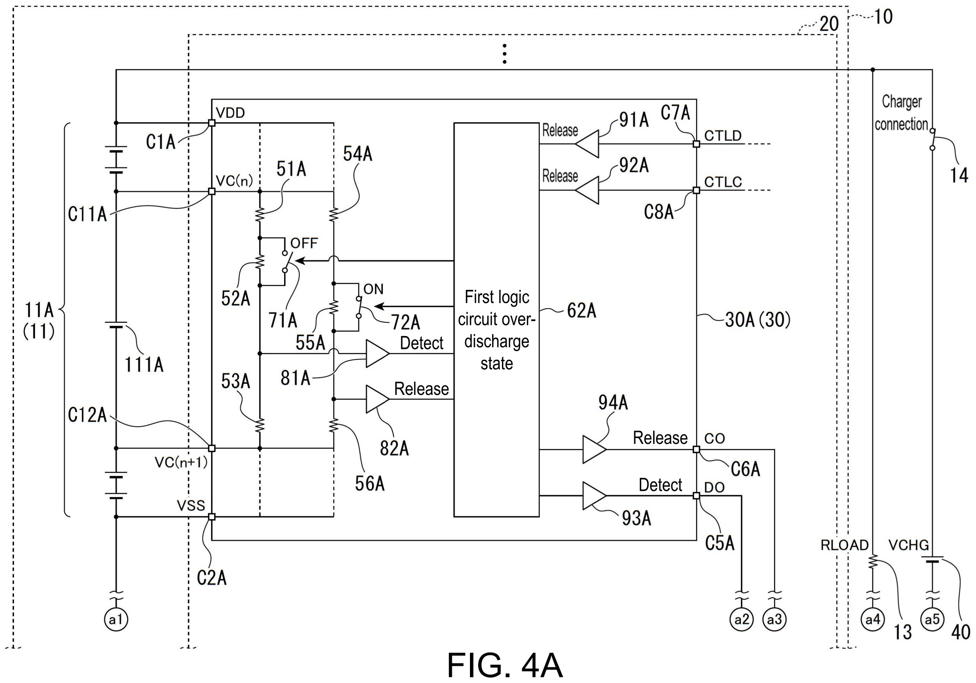

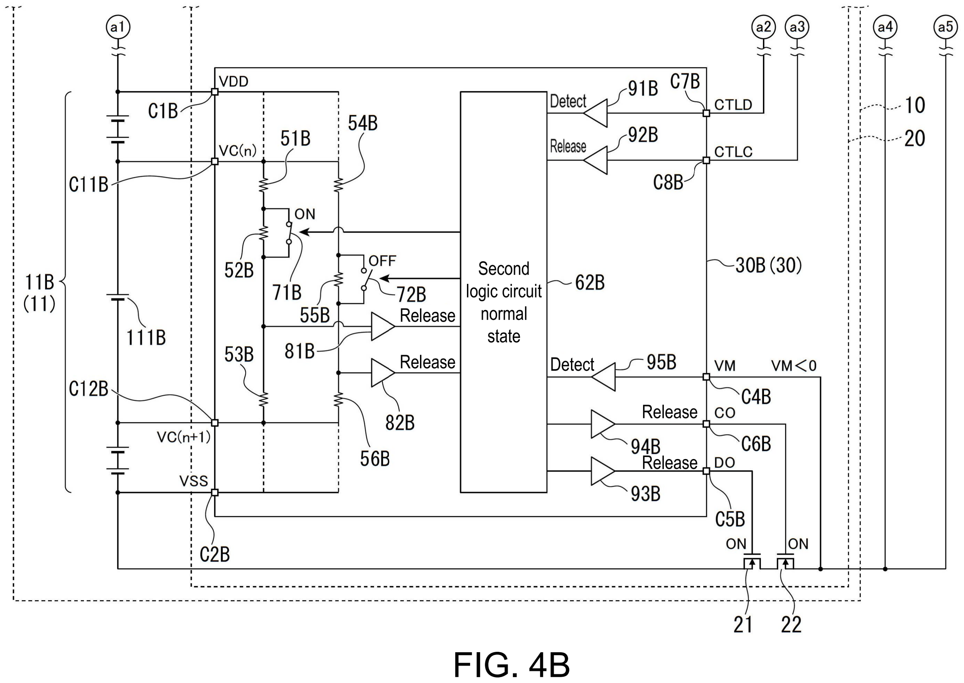

FIG. 4A and FIG. 4B are diagrams illustrating a fourth state of the battery device 10 according to the embodiment.

Changes from the third state will be described.

The switch 14 is controlled to a closed (SHORT) state. As a result, the battery device 10 and the charger 40 are connected.

The voltage VM becomes lower than 0[V] (VM<0). As a result, the output port of the charger connection detection circuit 95B is in a detection state.

The second logic circuit 62B is in a normal state.

The output port of the discharge control signal output circuit 93B is in a release state by the second logic circuit 62B.

As a result, the discharge control FET 21 is controlled to an ON state.

In this way, by connecting the charger 40, the voltage VM decreases.

As a result, the charger connection detection circuit 95B of the lower IC outputs a detection signal. Accordingly, the second logic circuit 62B masks the detection signal from the output port of the discharge control signal detection circuit 91B and transitions to a normal state. Then, the second logic circuit 62B turns on the discharge control FET 21.

Here, the second logic circuit 62B maintains masking the detection signal of the DO terminal output control terminal C7B in the case of the voltage VM being lower than 0[V] (in the case where the charger 40 is connected).

In the upper IC, the over-discharge state of the first logic circuit 62A is maintained.

That is, in the examples of the third state and the fourth state, in the upper IC, for example, after the power is turned on, the over-discharge state is detected and notified to the lower IC, and then the over-discharge state is maintained.

In the present embodiment, masking is performed by software in the lower IC such that, for example, a complex circuit is not required.

### <Example of timing chart related to over-charge>

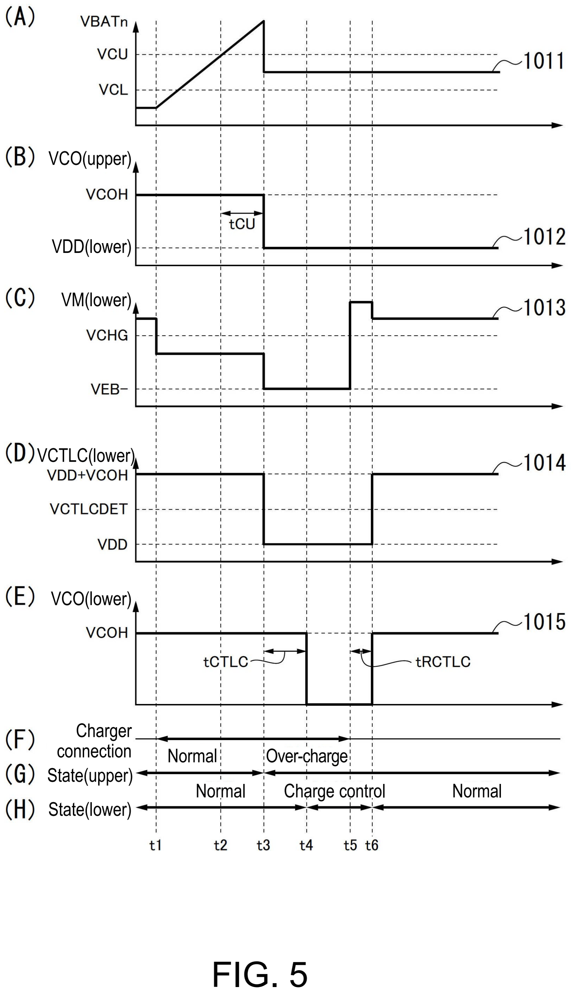

FIG. 5 is a diagram illustrating an example of a timing chart related to over-charge according to the embodiment.

FIG. 5 illustrates five graphs.

In the five graphs, each horizontal axis represents time and is a common time. Time t1 to time t6 are illustrated.

In the five graphs, each vertical axis represents voltage.

In the example of FIG. 5, (upper) represents the state of the upper side charge-discharge control circuit 30A, and (lower) represents the state of the lower side charge-discharge control circuit 30B.

The graph of (A) of FIG. 5 illustrates characteristics 1011 of the voltage VBATn of the first cell 111A of the upper IC.

In this graph, the vertical axis illustrates the over-charge detection voltage VCU and the over-charge release voltage VCL.

The graph of (B) of FIG. 5 illustrates characteristics 1012 of the voltage VCO of the charge control FET gate connection terminal C6A of the upper IC.

In this graph, the vertical axis illustrates a voltage VCOH which is a CO terminal voltage H, and the voltage VDD of the lower IC.

Also, in this graph, an over-charge detection delay time tCU is schematically illustrated.

The graph of (C) of FIG. 5 illustrates characteristics 1013 of the voltage VM of the lower IC.

In this graph, the vertical axis illustrates a charger detection voltage VCHG and voltage VEB-.

The graph of (D) of FIG. 5 illustrates characteristics 1014 of the voltage VCTLC of the CO terminal output control terminal C8B of the lower IC.

In this graph, the vertical axis illustrates the sum of the voltage VDD and the voltage VCOH (VDD+VCOH), a CTLC terminal detection voltage VCTLCDET, and the voltage VDD.

The graph of (E) of FIG. 5 illustrates characteristics 1015 of the voltage VCO of the charge control FET gate connection terminal C6B of the lower IC.

In this graph, the vertical axis illustrates the voltage VCOH.

Also, in this graph, a CTLC terminal detection delay time tCTLC and a CTLC terminal release delay time tRCTLC are schematically illustrated.

(F) of FIG. 5 illustrates the presence or absence of charger connection.

(G) of FIG. 5 illustrates whether the state of the upper IC is a normal state or an over-charge state.

(H) of FIG. 5 illustrates whether the state of the lower IC is a normal state or a charge control state.

Here, time t1 is the time when the charger 40 is connected to the battery device 10.

Time t2 is the time when the voltage VBATn of the first cell 111A of the upper IC exceeds the over-charge detection voltage VCU.

Time t3 is the time when the upper IC transitions from normal state to over-charge state.

Time t4 is the time when the lower IC transitions from normal state to charge control state.

Time t5 is the time when the charger 40 is removed from the battery device 10.

Time t6 is the time when the lower IC returns from charge control state to normal state.

### <Example of timing chart regarding over-discharge>

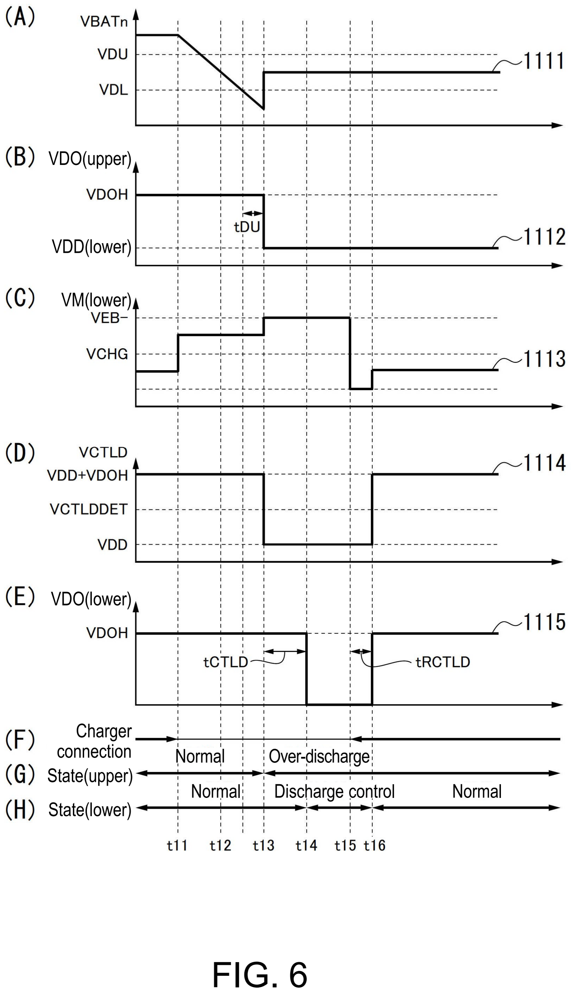

FIG. 6 is a diagram illustrating an example of a timing chart regarding over-discharge according to the embodiment.

FIG. 6 illustrates five graphs.

In the five graphs, each horizontal axis represents time and is a common time. Time t11 to time t16 are illustrated.

In the five graphs, each vertical axis represents voltage.

In the example of FIG. 6, (upper) represents the state of the upper side charge-discharge control circuit 30A, and (lower) represents the state of the lower side charge-discharge control circuit 30B.

The graph of (A) of FIG. 6 illustrates characteristics 1111 of the voltage VBATn of the first cell 111A of the upper IC.

In this graph, the vertical axis illustrates the over-discharge release voltage VDU and the over-discharge detection voltage VDL.

The graph of (B) of FIG. 6 illustrates characteristics 1112 of the voltage VDO of the discharge control FET gate connection terminal C5A of the upper IC.

In this graph, the vertical axis illustrates a voltage VDOH which is a DO terminal voltage H, and the voltage VDD of the lower IC.

Also, in this graph, an over-discharge detection delay time tDL is schematically illustrated.

The graph of (C) of FIG. 6 illustrates characteristics 1113 of the voltage VM of the lower IC.

In this graph, the vertical axis illustrates the charger detection voltage VCHG and voltage VEB-.

The graph of (D) of FIG. 6 illustrates characteristics 1114 of the voltage VCTLD of the DO terminal output control terminal C7B of the lower IC.

In this graph, the vertical axis illustrates the sum of the voltage VDD and the voltage VDOH (VDD+VDOH), a CTLD terminal detection voltage VCTLDDET, and the voltage VDD.

The graph of (E) of FIG. 6 illustrates characteristics 1115 of the voltage VDO of the discharge control FET gate connection terminal C5B of the lower IC.

In this graph, the vertical axis illustrates the voltage VDOH.

Also, in this graph, a CTLD terminal detection delay time tCTLD and a CTLD terminal release delay time tRCTLD are schematically illustrated.

(F) of FIG. 6 illustrates the presence or absence of charger connection.

(G) of FIG. 6 illustrates whether the state of the upper IC is a normal state or an over-discharge state.

(H) of FIG. 6 illustrates whether the state of the lower IC is a normal state or a discharge control state.

Here, time t11 is the time when the charger 40 is removed from the battery device 10. Time t12 is the time when the voltage VBATn of the first cell 111A of the upper IC falls below the over-discharge detection voltage VDL.

Time t13 is the time when the upper IC transitions from normal state to over-discharge state.

Time t14 is the time when the lower IC transitions from normal state to discharge control state.

Time t15 is the time when the charger 40 is connected to the battery device 10.

Time t16 is the time when the lower IC returns from discharge control state to normal state.

### [Regarding Embodiment]

As described above, in the charge-discharge control circuit 30, the charge-discharge control device 20, and the battery device 10 according to the present embodiment, the lower IC (charge-discharge control circuit 30B) masks cascade communication signals (charge control signal, discharge control signal) from the upper IC (charge-discharge control circuit 30A) according to the voltage VM of the external voltage input terminal C4B, thereby pseudo-realizing over-charge state and over-discharge state release.

For example, in an over-charge state, in the lower IC, in the case of the voltage VM>0[V] it is determined that the charger 40 is not connected, and the charge control signal (signal that prohibits charging) from the upper IC is masked, such that the charge control FET 22 is turned on.

For example, in an over-discharge state, in the lower IC, in the case of the voltage VM<0[V] it is determined that the charger 40 is connected, and the discharge control signal (signal that prohibits discharge) from the upper IC is masked, such that the discharge control FET 21 is turned on.

Thus, in the charge-discharge control circuit 30, the charge-discharge control device 20, the and the battery device 10 according to the present embodiment, by masking cascade communication signals according to the voltage VM, for example, state release may be realized for over-charge and over-discharge without adding dedicated terminals for cascade communication signals.

Thus, in charge-discharge control circuit 30, charge-discharge control device 20, and the battery device 10 according to the present embodiment, in response to a plurality of protection ICs being cascade connected, circuit scale can be suppressed.

In the present embodiment, for example, since dedicated terminals for cascade communication signals are not required, chip size and package pin count can be reduced compared to conventional circuits. In the present embodiment, for example, since there is no addition of pads, it is possible to reduce chip size.

Also, in the present embodiment, since the lower IC controls output based on the voltage VM without depending on communication signals from the upper IC, for example, during over-charge state release or over-discharge state release, FET (the charge control FET 22 or the discharge control FET 21) may be turned on more quickly compared to conventional circuits. As a result, damage to the body diode (not illustrated) of the relevant FET can be reduced.

Here, configuration examples of charge-discharge control circuit 30, charge-discharge control device 20, and the battery device 10 according to the present embodiment are illustrated.

The first logic circuit 62A performs first control based on detection results of the first predetermined state detection part.

The first predetermined state detection part detects a first predetermined state regarding the first cell 111A.

The first predetermined state detection part includes a first ladder resistor, a first switch provided in parallel with the first ladder resistor, and a first comparator connected to one end of the first ladder resistor. With such a configuration, the first predetermined state detection part may perform operations related to over-charge or over-discharge.

The first logic circuit 62A performs control such as controlling on-off of the first switch based on output from the first comparator.

The second logic circuit 62B performs second control based on detection results of the second predetermined state detection part, detection results of the charger connection detection part, and cascade communication signal from the first logic circuit 62A (first notification indicating the first predetermined state).

The charger connection detection part (charger connection detection circuit 95B) detects presence or absence of connection between the battery 11 and the charger 40.

The second predetermined state detection part detects a second predetermined state regarding the second cell 111B.

The second predetermined state detection part includes a second ladder resistor, a second switch provided in parallel with the second ladder resistor, and a second comparator connected to one end of the second ladder resistor. With such a configuration, the second predetermined state detection part may perform operations related to over-charge or over-discharge.

The second logic circuit 62B performs control such as controlling on-off of the second switch based on output from the second comparator.

The second logic circuit 62B performs second control by masking (invalidating) the first notification from the first logic circuit 62A in the case of the detection result of the charger connection detection part satisfying a predetermined condition.

By performing masking of the first notification in the second logic circuit 62B in this way, it is possible to avoid, for example, adding a dedicated terminal for the cascade communication signal.

As an example, the first predetermined state is an over-charge state.

In this case, the predetermined condition includes a condition that the charger 40 is removed from the battery 11.

The second control by the second logic circuit 62B includes control to turn on the charge control FET 22.

Also, on the side of the first logic circuit 62A, regarding the over-charge state, the first ladder resistor is the over-charge detection ladder resistors 54A to 56A, the first switch is switch 72A, and the first comparator is the over-charge detection comparator 82A.

Also, on the side of the second logic circuit 62B, regarding the over-charge state, the second ladder resistor is the over-charge detection ladder resistors 54B to 56B, the second switch is switch 72B, and the second comparator is the over-charge detection comparator 82B.

With such a configuration, state release during an over-charge state is possible.

Moreover, the state release related to the over-charge state in the present embodiment (the state release of the over-charge state performed by the second logic circuit 62B using a mask) may be called by any name, for example, it may be called VCU release or the like.

As another example, the first predetermined state is an over-discharge state.

In this case, the predetermined condition includes a condition that the charger 40 is connected to the battery 11.

The second control by the second logic circuit 62B includes control to turn on the discharge control FET 21.

Also, on the side of the first logic circuit 62A, regarding the over-discharge state, the first ladder resistor is the over-discharge detection ladder resistors 51A to 53A, the first switch is switch 71A, and the first comparator is the over-discharge detection comparator 81A.

Also, on the side of the second logic circuit 62B, regarding the over-discharge state, the second ladder resistor is the over-discharge detection ladder resistors 51B to 53B, the second switch is switch 71B, and the second comparator is the over-discharge detection comparator 81B.

With such a configuration, state release during an over-discharge state is possible.

Moreover, the state release related to the over-discharge state in the present embodiment (the state release of the over-discharge state performed by the second logic circuit 62B using a mask) may be called by any name, for example, it may be called VDL release or the like.

Here, a configuration example in the case where the first predetermined state is an over-charge state and a configuration example in the case where the first predetermined state is an over-discharge state have been described, but as in the present embodiment, a configuration corresponding to both the over-charge state and the over-discharge state may be used.

Moreover, a configuration corresponding to any one of the configuration example in the case where the first predetermined state is an over-charge state and the configuration example in the case where the first predetermined state is an over-discharge state may be used.

### [Description of comparative example]

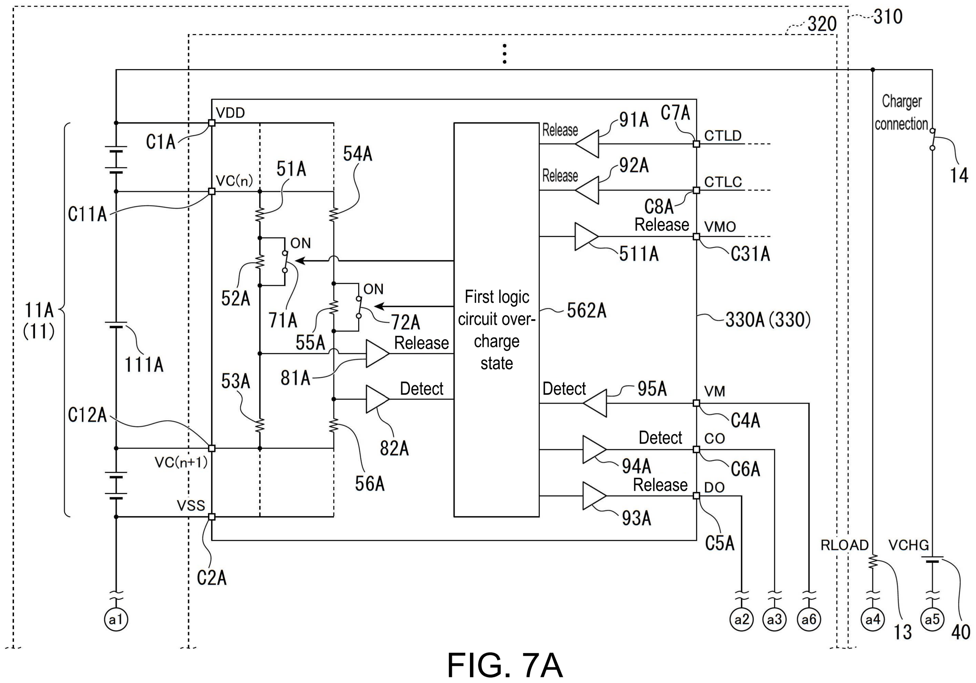

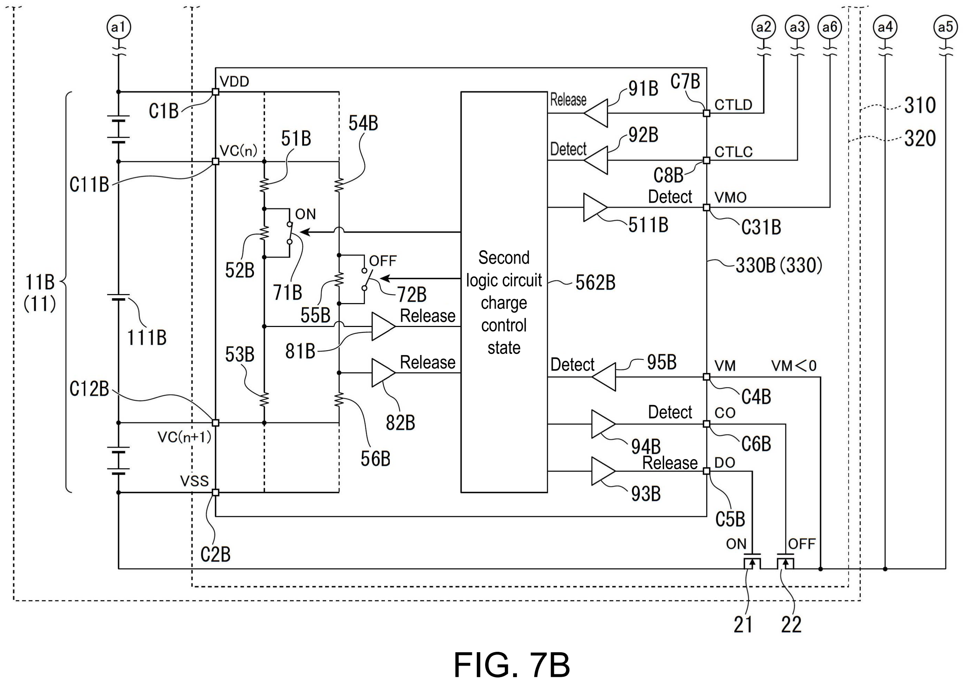

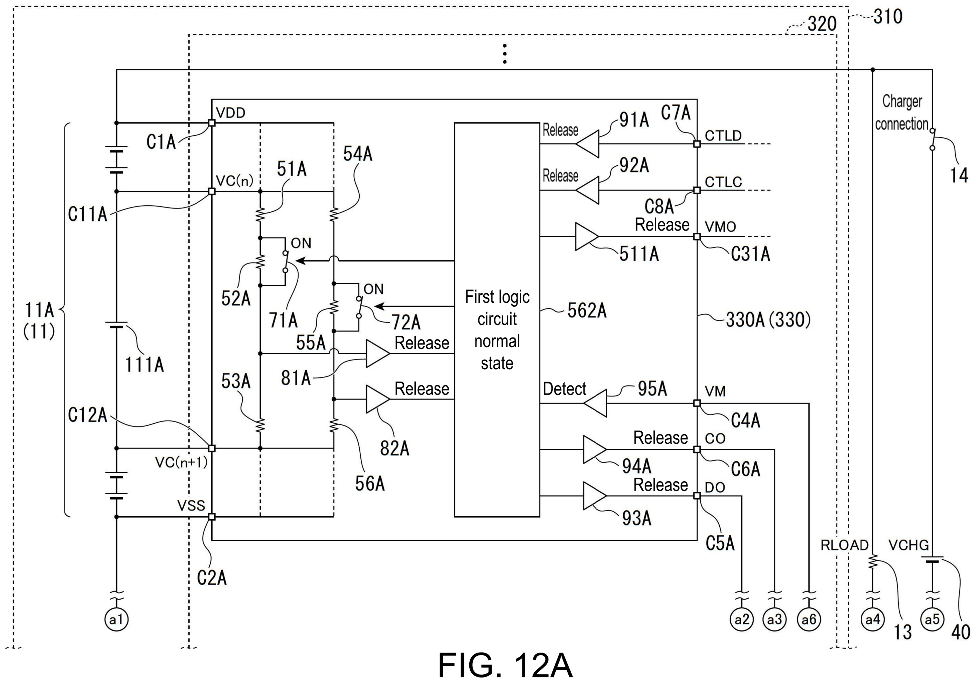

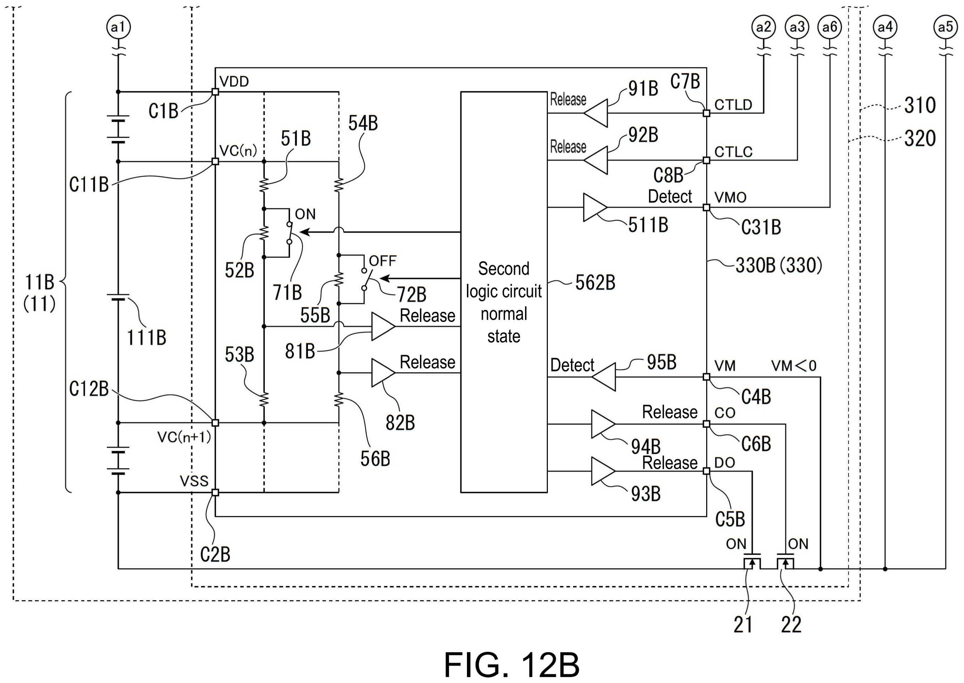

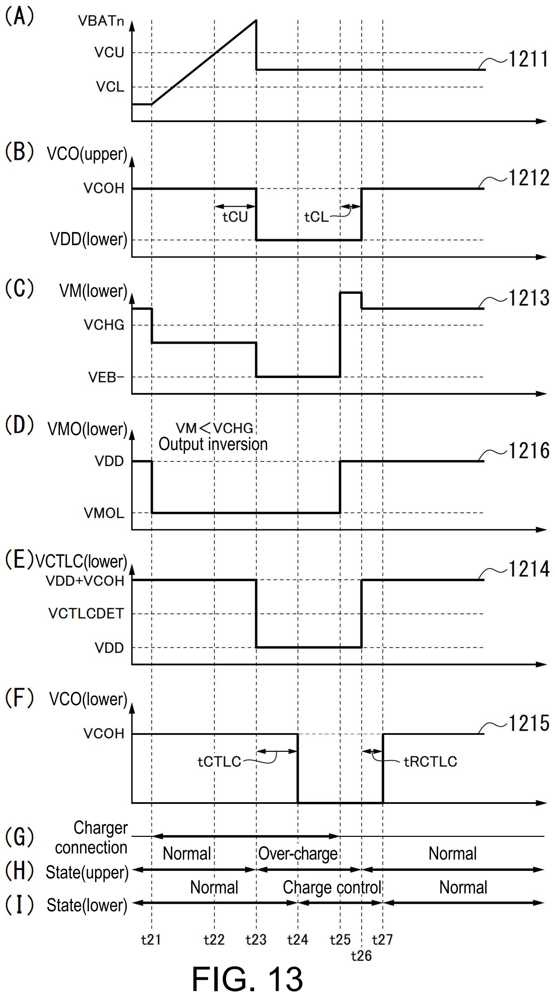

A comparative example will be described with reference to FIG. 7 (FIG. 7A and FIG. 7B) to FIG. 12 (FIG. 12A and FIG. 12B), and FIG. 13 to FIG. 14.

For convenience of description, in FIG. 7A and FIG. 7B to FIG. 12A and FIG. 12B, the same reference signs are assigned to the same components as in FIG. 1A and FIG. 1B to FIG. 4A and FIG. 4B for description.

FIG. 7A and FIG. 7B are diagrams illustrating configuration examples of a charge-discharge control circuit 330, a charge-discharge control device 320, and a battery device 310 according to a comparative example, and a first state of the battery device 310 (first state in the comparative example).

The battery device 310 according to the comparative example differs from the battery device 10 according to the embodiment (example of FIG. 1A and FIG. 1B) in that it includes a charge-discharge control circuit 330A and a charge-discharge control circuit 330B instead of the charge-discharge control circuit 30A and the charge-discharge control circuit 30B in the battery device 10 according to the embodiment.

For convenience of illustration, the battery device 310 is illustrated divided into FIG. 7A and FIG. 7B, but these are an integrated device.

Each of the lines with the reference signs a1 to a6 illustrated in FIG. 7A and each of the lines with the reference signs a1 to a6 illustrated in FIG. 7B are connected.

The charge-discharge control circuit 330B differs from the charge-discharge control circuit 30B in the battery device 10 according to the embodiment in that it includes a charger connection detection signal output circuit 511B and a charger connection signal output terminal C31B, and includes a second logic circuit 562B instead of the second logic circuit 62B according to the embodiment.

The charge-discharge control circuit 330A differs from the charge-discharge control circuit 30A in the battery device 10 according to the embodiment in that it includes a charger connection detection circuit 95A and an external voltage input terminal C4A, and a charger connection detection signal output circuit 511A, and includes a first logic circuit 562A instead of the first logic circuit 62A according to the embodiment.

An input port of the charger connection detection signal output circuit 511B and one output port of the second logic circuit 562B are connected.

An output port of the charger connection detection signal output circuit 511B and the charger connection signal output terminal C31B are connected.

The charger connection signal output terminal C31B of the lower IC (charge-discharge control circuit 330B) and the external voltage input terminal C4A of the upper IC (charger connection signal output terminal C31A) are connected.

The external voltage input terminal C4A and an input port of the charger connection detection circuit 95A are connected.

An output port of the charger connection detection circuit 95A and one input port of the first logic circuit 562A are connected.

An input port of the charger connection detection signal output circuit 511A and one output port of the first logic circuit 562A are connected.

An output port of the charger connection detection signal output circuit 511A and the charger connection signal output terminal C31A are connected.

### <First state in comparative example: description of over-charge state release during cascade communication>

FIG. 7A and FIG. 7B show a first state of the battery device 310.

In the first state in the comparative example, compared to the first state of the battery device 10 illustrated in FIG. 1A and FIG. 1B according to the present embodiment, the charger connection detection signal output circuit 511B is in a detection state, the charger connection detection circuit 95A is in a detection state, the charger connection detection signal output circuit 511A is in a release state, and the over-charge detection comparator 82A is in a detection state.

Here, in the case of the first cell 111A connected to the upper IC exceeding the over-charge detection voltage VCU, the first logic circuit 562A transitions to an over-charge state.

The charge control signal output circuit 94A is controlled to a detection state by the first logic circuit 562A, a detection signal is received by the charge control signal detection circuit 92B of the lower IC, and the second logic circuit 562B transitions to a charge control state. As a result, the charge control FET 22 is controlled to an OFF state by the second logic circuit 562B.

Due to the charge stop, the voltage VBATn of the first cell 111A decreases slightly and becomes less than the over-charge detection voltage VCU.

### <Second state in comparative example: description of over-charge state release during cascade communication>

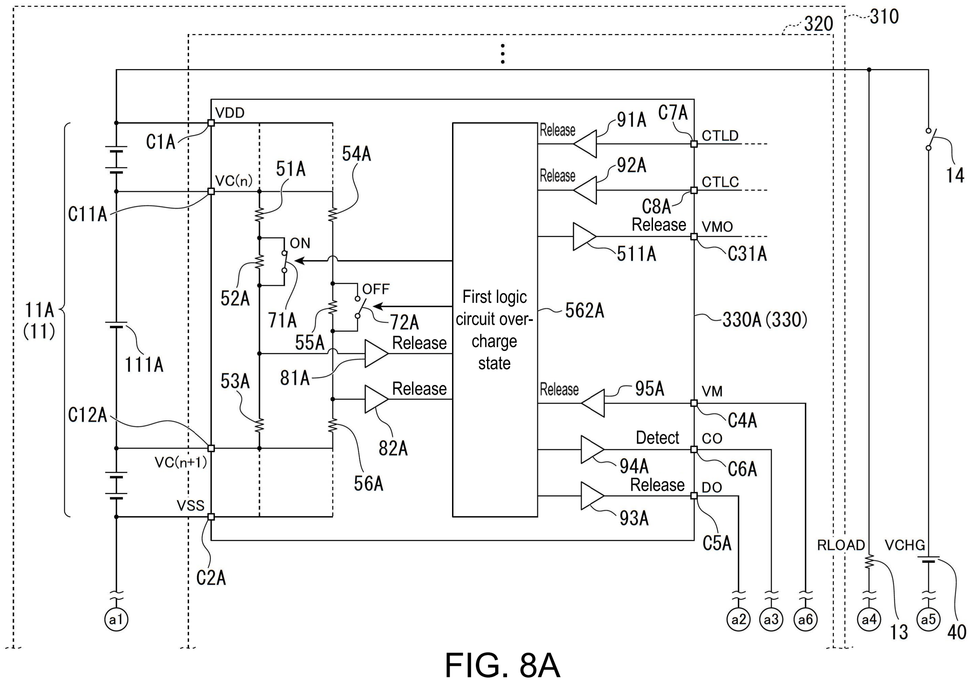

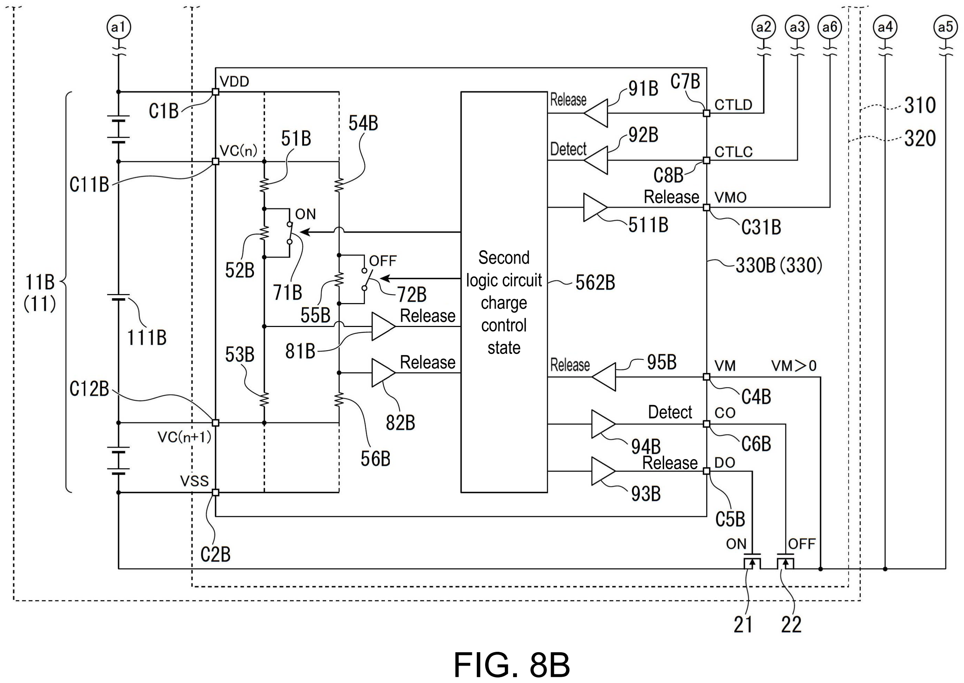

FIG. 8A and FIG. 8B are diagrams illustrating a second state of the battery device 310 according to the comparative example.

Changes from the first state will be described.

The switch 14 is controlled to an open (OPEN) state. As a result, the battery device 310 and the charger 40 are in a non-connected state (disconnected state).

The voltage VM becomes higher than 0[V] (VM>0). As a result, the output port of the charger connection detection circuit 95B is in a release state.

The charger connection detection signal output circuit 511B is in a release state by the second logic circuit 562B. As a result, the charger connection detection circuit 95A is in a release state.

The first logic circuit 562A controls the switch 72A to OFF.

In this way, by removing the charger 40, the voltage VM increases.

As a result, the charger connection detection circuit 95B of the lower IC outputs a release signal. Accordingly, the second logic circuit 562B puts the charger connection detection signal output circuit 511B in a release state, and a release signal is output from the charger connection detection signal output circuit 511B.

The upper IC performs over-charge state release by turning off the switch 72A of the over-charge detection ladder resistor 55A.

The over-charge detection comparator 82A is in a release state and outputs a release signal.

### <Third state in comparative example: description of over-charge state release during cascade communication>

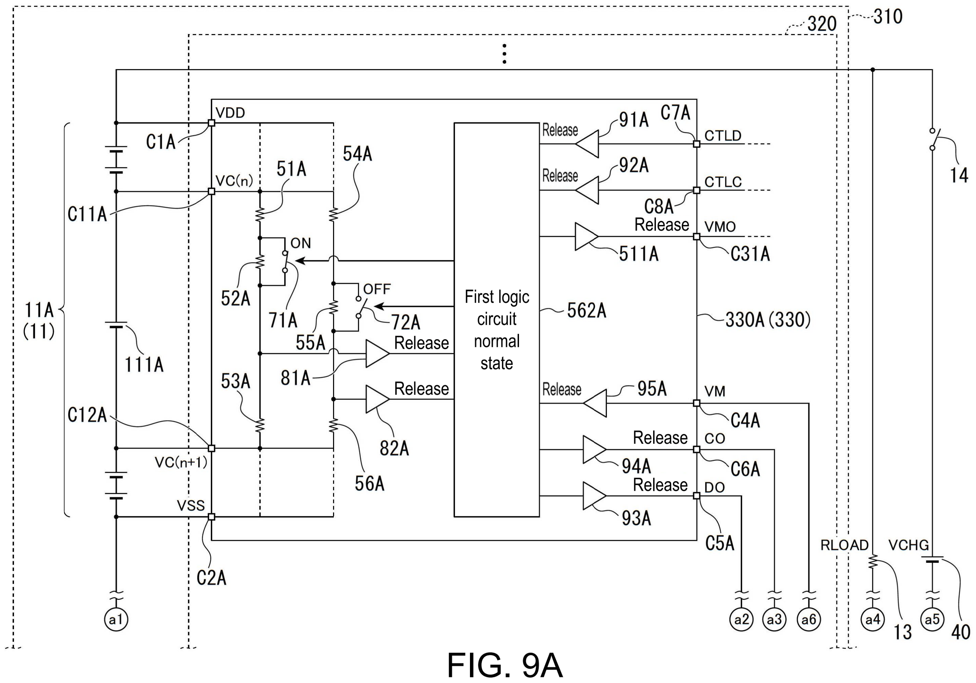

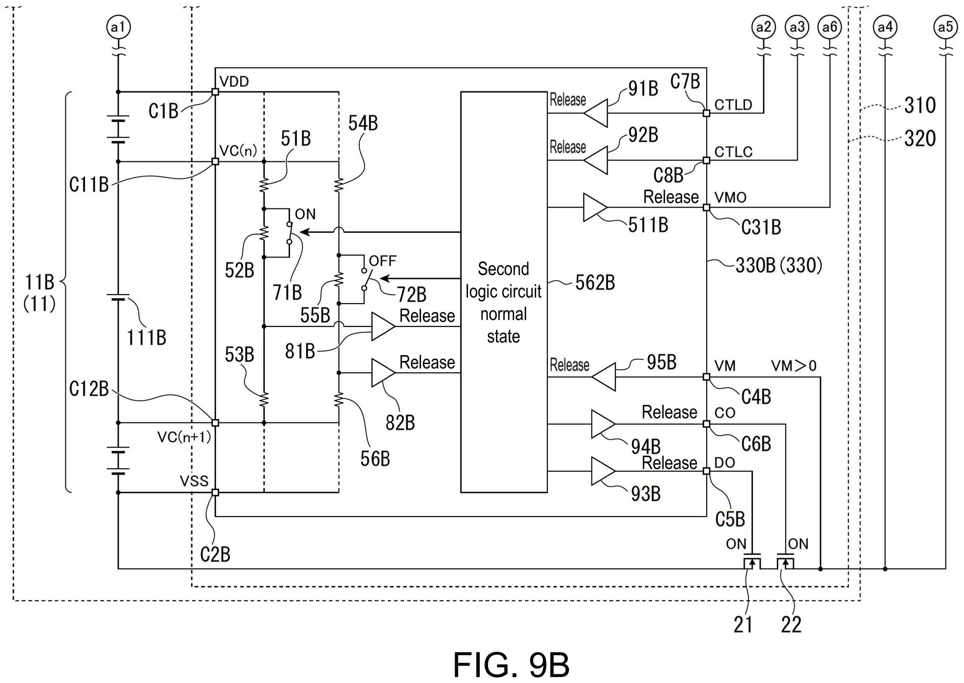

FIG. 9A and FIG. 9B are diagrams illustrating a third state of the battery device 310 according to the comparative example.

Changes from the second state will be described.

The first logic circuit 562A is in a normal state.

The output port of the charge control signal output circuit 94A is controlled to a release state by the first logic circuit 562A. As a result, the output port of the charge control signal detection circuit 92B is in a release state.

The second logic circuit 562B is in a normal state.

The output port of the charge control signal output circuit 94B is in a release state by the second logic circuit 562B. As a result, the charge control FET 22 is controlled to an ON state.

In this way, the upper IC transitions to a normal state after the over-charge detection comparator 82A outputs a release signal.

As a result, a release signal is output from the charge control signal output circuit 94A, and a release signal is output from the charge control signal detection circuit 92B.

The lower IC transitions to a normal state and controls the charge control FET 22 to an ON state.

### <Fourth state in comparative example: description of over-discharge state release during cascade communication>

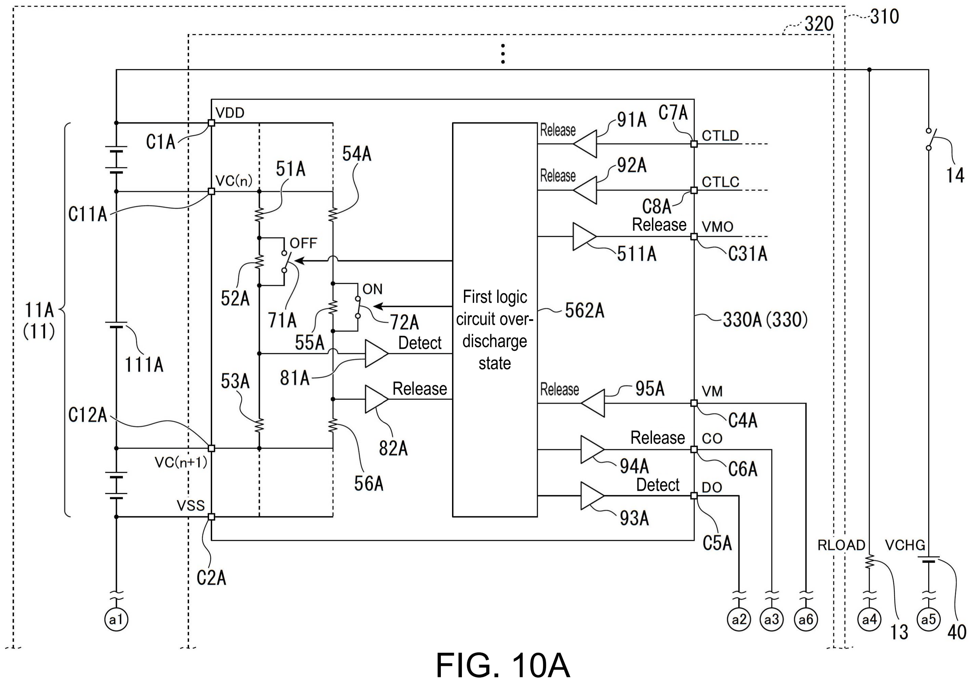

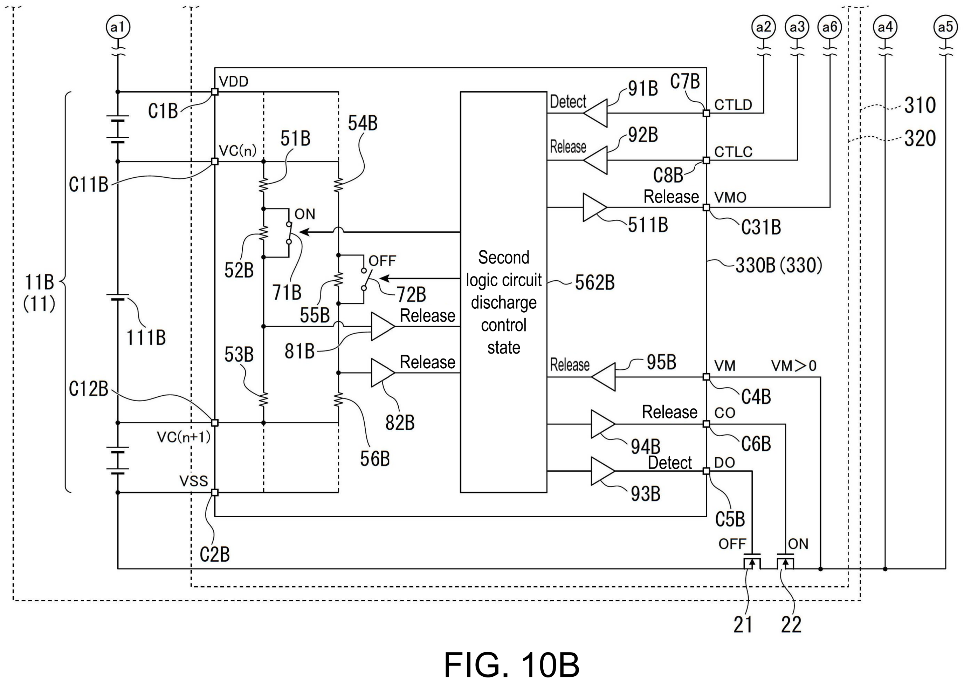

FIG. 10A and FIG. 10B are diagrams illustrating a fourth state of the battery device 310 according to the comparative example.

In this example, compared to the third state of the battery device 10 illustrated in FIG. 3A and FIG. 3B according to the present embodiment, the charger connection detection signal output circuit 511B is in a release state, the charger connection detection circuit 95A is in a release state, and the charger connection detection signal output circuit 511A is in a release state.

Here, in the case of the first cell 111A connected to the upper IC falling below the over-discharge detection voltage VDL, the first logic circuit 562A transitions to an over-discharge state.

The discharge control signal output circuit 93A is controlled to a detection state by the first logic circuit 562A, a detection signal is received by the discharge control signal detection circuit 91B of the lower IC, and the second logic circuit 562B transitions to a discharge control state. As a result, the discharge control FET 21 is controlled to an OFF state by the second logic circuit 562B.

Due to the discharge stop, the voltage VBATn of the first cell 111A rises slightly and becomes higher than the over-discharge release voltage VDU.

### <Fifth state in comparative example: description of over-discharge state release during cascade communication>

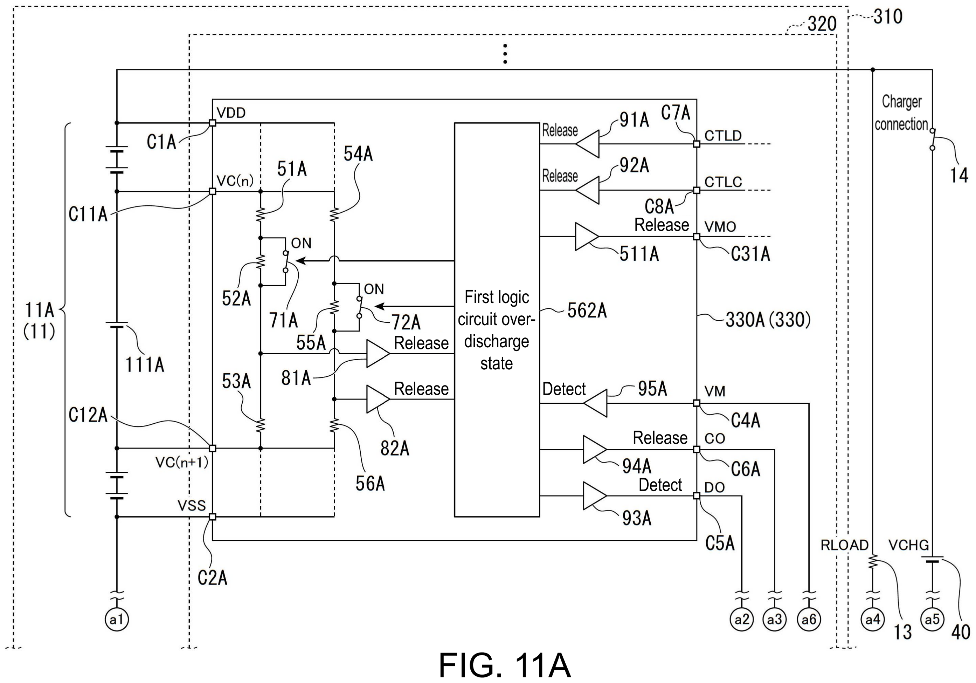

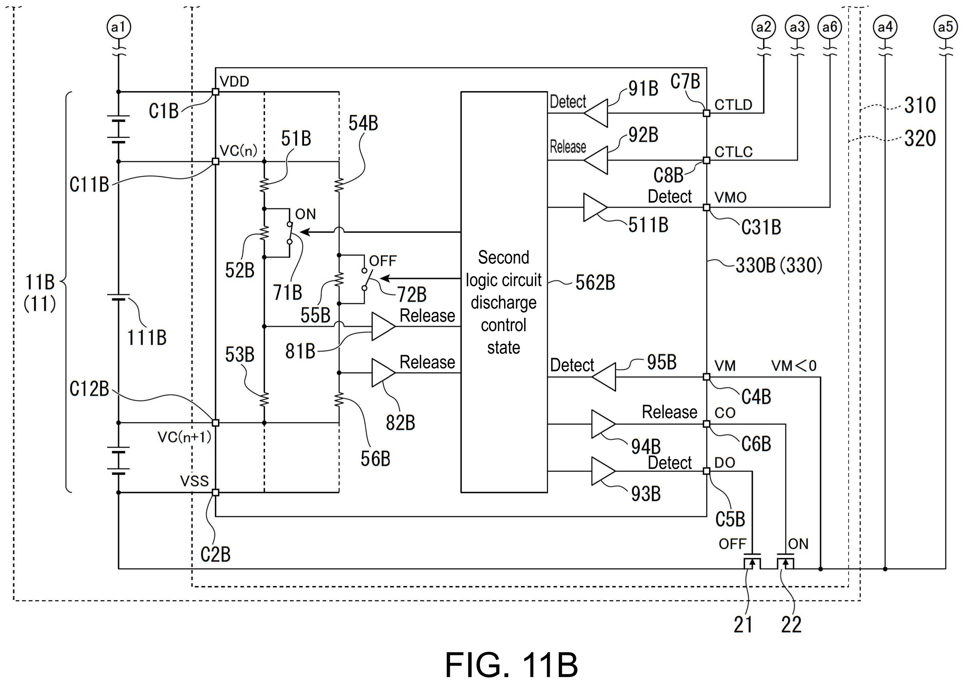

FIG. 11A and FIG. 11B are diagrams illustrating a fifth state of the battery device 310 according to the comparative example.

Changes from the fourth state will be described.

The switch 14 is controlled to a closed (SHORT) state. As a result, the battery device 10 and the charger 40 are connected.

The voltage VM becomes lower than 0[V] (VM<0). As a result, the output port of the charger connection detection circuit 95B is in a detection state.

The charger connection detection signal output circuit 511B is controlled to a detection state by the second logic circuit 562B. As a result, the charger connection detection circuit 95A is in a detection state.

The first logic circuit 562A controls the switch 71A to turn on.

In this way, by connecting the charger 40, the voltage VM decreases.

As a result, the charger connection detection circuit 95B of the lower IC outputs a detection signal. Accordingly, the second logic circuit 562B puts the charger connection detection signal output circuit 511B in a detection state, and a detection signal is output from the charger connection detection signal output circuit 511B.

The upper IC performs over-discharge state release by turning on the switch 71A of the over-discharge detection ladder resistor 52A.

The over-discharge detection comparator 81A is in a release state and outputs a release signal.

### <Sixth state in comparative example: description of over-discharge state release during cascade communication>

Changes from the fifth state will be described.

FIG. 12A and FIG. 12B are diagrams illustrating a sixth state of the battery device 310 according to the comparative example.

The first logic circuit 562A is in a normal state.

The output port of the discharge control signal output circuit 93A is controlled to a release state by the first logic circuit 562A. As a result, the output port of the discharge control signal detection circuit 91B is in a release state.

The second logic circuit 562B is in a normal state.

The output port of the discharge control signal output circuit 93B is controlled to a release state by the second logic circuit 562B. As a result, the discharge control FET 21 is controlled to an ON state.

In this way, the upper IC transitions to a normal state after the over-discharge detection comparator 81A outputs a release signal.

As a result, a release signal is output from the discharge control signal output circuit 93A, and a release signal is output from the discharge control signal detection circuit 91B.

The lower IC transitions to a normal state and controls the discharge control FET 21 to an ON state.

### <Example of timing chart related to over-charge according to comparative example>

FIG. 13 is a diagram illustrating an example of a timing chart related to over-charge according to a comparative example.

FIG. 13 illustrates six graphs.

In the six graphs, each horizontal axis represents time and illustrates a common time. Time t21 to time t27 are illustrated.

In the six graphs, each vertical axis represents voltage.

In the example of FIG. 13, (upper) represents the state of the upper side charge-discharge control circuit 330A, and (lower) represents the state of the lower side charge-discharge control circuit 330B.

The graph of (A) of FIG. 13 illustrates characteristics 1211 of the voltage VBATn of the first cell 111A of the upper IC.

In this graph, the vertical axis illustrates the over-charge detection voltage VCU and the over-charge release voltage VCL.

The graph of (B) of FIG. 13 illustrates characteristics 1212 of the voltage VCO of the charge control FET gate connection terminal C6A of the upper IC.

In this graph, the vertical axis illustrates the voltage VCOH which is the CO terminal voltage H, and the voltage VDD of the lower IC.

Also, in this graph, the over-charge detection delay time tCU and an over-charge release delay time tCL are schematically illustrated.

The graph of (C) of FIG. 13 illustrates characteristics 1213 of the voltage VM of the lower IC.

In this graph, the vertical axis illustrates the charger detection voltage VCHG and voltage VEB-.

The graph of (D) of FIG. 13 illustrates characteristics 1216 of a voltage VMO of the charger connection signal output terminal C31B of the lower IC.

In this graph, the vertical axis illustrates the voltage VDD and a voltage VMOL which is terminal voltage L of the charger connection signal output terminal C31B.

In this graph, it illustrates that output inversion (VM<VCHG) has occurred.

The graph of (E) of FIG. 13 illustrates characteristics 1214 of the voltage VCTLC of the CO terminal output control terminal C8B of the lower IC.

In this graph, the vertical axis illustrates the sum of the voltage VDD and the voltage VCOH (VDD+VCOH), the CTLC terminal detection voltage VCTLCDET, and the voltage VDD.

The graph of (F) of FIG. 13 illustrates characteristics 1215 of the voltage VCO of the charge control FET gate connection terminal C6B of the lower IC.

In this graph, the vertical axis illustrates the voltage VCOH.

Also, in this graph, the CTLC terminal detection delay time tCTLC and the CTLC terminal release delay time tRCTLC are schematically illustrated.

(G) of FIG. 13 illustrates the presence or absence of charger connection.

(H) of FIG. 13 illustrates whether the state of the upper IC is a normal state or an over-charge state.

(I) of FIG. 13 illustrates whether the state of the lower IC is a normal state or a charge control state.

Here, time t21 is the time when the charger 40 is connected to the battery device 310.

Time t22 is the time when the voltage VBATn of the first cell 111A of the upper IC exceeds the over-charge detection voltage VCU.

Time t23 is the time when the upper IC transitions from normal state to over-charge state.

Time t24 is the time when the lower IC transitions from normal state to charge control state.

Time t25 is the time when the charger 40 is removed from the battery device 310.

Time t26 is the time when the upper IC returns from over-charge state to normal state.

Time t27 is the time when the lower IC returns from charge control state to normal state.

### <Example of timing chart related to over-discharge according to comparative example>

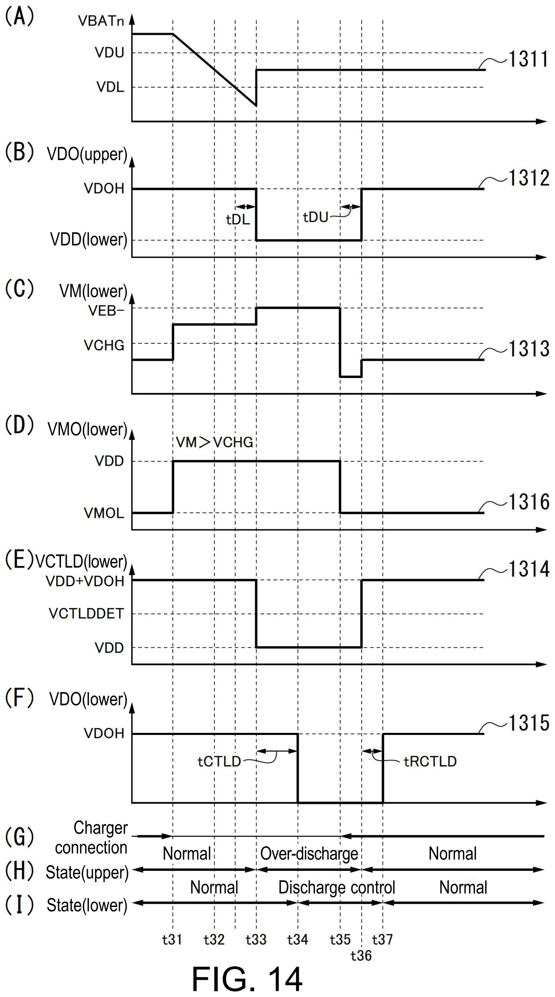

FIG. 14 is a diagram illustrating an example of a timing chart related to over-discharge according to comparative example.

FIG. 14 illustrates six graphs.

In the six graphs, each horizontal axis represents time and is a common time. Time t31 to time t37 are illustrated.

In the six graphs, each vertical axis represents voltage.

In the example of FIG. 14, (upper) represents the state of the upper side charge-discharge control circuit 330A, and (lower) represents the state of the lower side charge-discharge control circuit 330B.

The graph of (A) of FIG. 14 illustrates characteristics 1311 of the voltage VBATn of the first cell 111A of the upper IC.

In this graph, the vertical axis illustrates the over-discharge release voltage VDU and the over-discharge detection voltage VDL.

The graph of (B) of FIG. 14 illustrates characteristics 1312 of the voltage VDO of the discharge control FET gate connection terminal C5A of the upper IC.

In this graph, the vertical axis illustrates the voltage VDOH which is the DO terminal voltage H, and the voltage VDD of the lower IC.

Also, in this graph, the over-discharge detection delay time tDL and an over-discharge release delay time tDU are schematically illustrated.

The graph of (C) of FIG. 14 illustrates characteristics 1313 of the voltage VM of the lower IC.

In this graph, the vertical axis illustrates voltage VEB- and the charger detection voltage VCHG.

The graph of (D) of FIG. 14 illustrates characteristics 1316 of the voltage VMO of the charger connection signal output terminal C31B of the lower IC.

In this graph, the vertical axis illustrates the voltage VDD and the voltage VMOL which is terminal voltage L of the charger connection signal output terminal C31B.

In this graph, it illustrates that output (VM>VCHG) has occurred.

The graph of (E) of FIG. 14 illustrates characteristics 1314 of the voltage VCTLD of the DO terminal output control terminal C7B of the lower IC.

In this graph, the vertical axis illustrates the sum of the voltage VDD and the voltage VDOH (VDD+VDOH), the CTLD terminal detection voltage VCTLDDET, and the voltage VDD.

The graph of (F) of FIG. 14 illustrates characteristics 1315 of the voltage VDO of the discharge control FET gate connection terminal C5B of the lower IC.

In this graph, the vertical axis illustrates the voltage VDOH.

Also, in this graph, the CTLD terminal detection delay time tCTLD and the CTLD terminal release delay time tRCTLD are schematically illustrated.

(G) of FIG. 14 illustrates the presence or absence of charger connection.

(H) of FIG. 14 illustrates whether the state of the upper IC is a normal state or an over-discharge state.

(I) of FIG. 14 illustrates whether the state of the lower IC is a normal state or a discharge control state.

Here, time t31 is the time when the charger 40 is removed from the battery device 310.

Time t32 is the time when the voltage VBATn of the first cell 111A of the upper IC falls below the over-discharge detection voltage VDL.

Time t33 is the time when the upper IC transitions from normal state to over-discharge state.

Time t34 is the time when the lower IC transitions from normal state to discharge control state.

Time t35 is the time when the charger 40 is connected to the battery device 310.

Time t36 is the time when the upper IC returns from over-discharge state to normal state.

Time t37 is the time when the lower IC returns from discharge control state to normal state.

As described above, in the battery device 310 according to the comparative example, dedicated terminals for cascade communication signals between the upper IC and the lower IC (in this example, the charger connection signal output terminal C31B in the lower IC, the charger connection detection circuit 95A and the charger connection signal output terminal C31A in the upper IC) are required.

In contrast, in the battery device 10 according to the present embodiment, such dedicated terminals are not required.

### (Example of over-charge state release and over-discharge state release according to reference example)

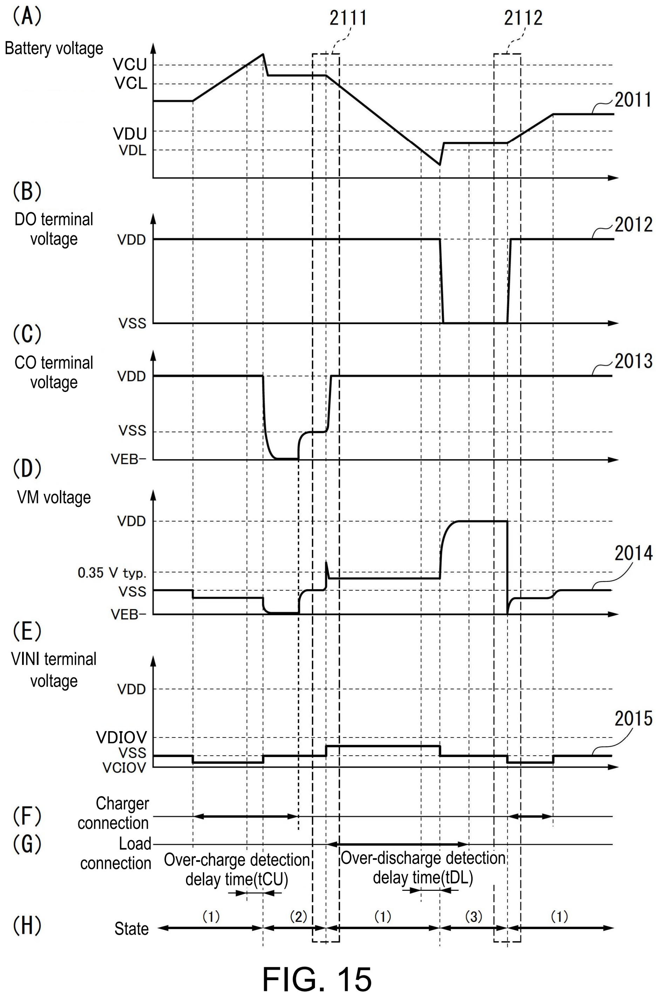

FIG. 15 is a diagram illustrating an over-charge state release and an over-discharge state release according to a reference example.

Here, an outline of the reference example is described, and detailed description is omitted.

In the graphs illustrated in each of (A) of FIG. 15 to (E) of FIG. 15, the horizontal axis represents time, and the vertical axis represents each voltage.

(A) of FIG. 15 illustrates characteristics 2011 of battery voltage.

(B) of FIG. 15 illustrates characteristics 2012 of DO terminal voltage.

(C) of FIG. 15 illustrates characteristics 2013 of CO terminal voltage.

(D) of FIG. 15 illustrates characteristics 2014 of VM voltage.

(E) of FIG. 15 illustrates characteristics 2015 of VINI terminal voltage. The VINI terminal (not shown) is a terminal for detecting an overcurrent state.

(F) of FIG. 15 illustrates the presence or absence of charger connection. In response to a charger being connected, the VINI terminal voltage drops from the voltage VSS, and in response to the VINI terminal voltage falling below a charging overcurrent detection voltage VCIOV, a charging overcurrent state (not shown) is detected.

(G) of FIG. 15 illustrates the presence or absence of load connection. In response to a load being connected, the VINI terminal voltage rises from the voltage VSS, and in response to the VINI terminal voltage exceeding a discharging overcurrent detection voltage VDIOV, a discharging overcurrent state (not shown) is detected.

(H) of FIG. 15 illustrates the state of the IC, indicating whether it is (1) normal state, (2) over-charge state, or (3) over-discharge state.

FIG. 15 schematically illustrates an over-charge state release 2111 and an over-discharge state release 2112.

### <Regarding over-charge state and state release>

In the case of the battery voltage in normal state exceeding the over-charge detection voltage VCU during charging and maintaining that state for the over-charge detection delay time tCU or longer, the charge control FET is turned off to stop charging. This state is the over-charge state.

And, as one of the releases of the over-charge state, there is the over-charge state release 2111 as illustrated in FIG. 15.

In such an over-charge state release 2111, in the case of the voltage VM being equal to or greater than a predetermined value, the over-charge state is released in response to the battery voltage dropping to the over-charge release voltage VCL or below.

### <Regarding over-discharge state and state release>

In the case of the battery voltage in normal state falling below the over-discharge detection voltage VDL during discharge and maintaining that state for the over-discharge detection delay time tDL or longer, the discharge control FET is turned off to stop discharge. This state is the over-discharge state.

And, in the case of the voltage VM becoming equal to or greater than a predetermined value in the over-discharge state, the power down function operates to reduce current consumption to the power down current consumption. The power down function is released by connecting a charger and the voltage VM becoming equal to or below the relevant predetermined value.

As one of the releases of the over-discharge state, there is the over-discharge state release 2112 as illustrated in FIG. 15.

In such an over-discharge state release 2112, in the case of connecting a charger and the voltage VM being equal to or below a predetermined value, the over-discharge state is released in response to the battery voltage being equal to or greater than the over-discharge release voltage VDU.

The over-charge state release processing according to the present embodiment may be applied, for example, instead of the over-charge state release 2111 illustrated in FIG. 15.

Similarly, the over-discharge state release processing according to the present embodiment may be applied, for example, instead of the over-discharge state release 2112 illustrated in FIG. 15.

However, the present invention is not limited thereto, and the over-charge state release processing and the over-discharge state release processing according to the present embodiment may be applied to any circuit or any device.

As described above, the embodiments of the present invention have been described in detail with reference to the drawings, but the specific configuration is not limited to these embodiments, and designs within the scope that do not depart from the gist of the present invention are also included. For example, the discharge control FET 21, the charge control FET 22, the external voltage input terminal C4B, the discharge control FET gate connection terminal C5B, and the charge control FET gate connection terminal C6B are configured to be arranged on the low side (negative electrode side of the battery), but the present invention is not limited thereto, and they may be configured to be arranged on the high side (positive electrode side of the battery).

### [Reference Signs List]

10...battery device,
11...battery
11A, 11 B...battery part
13...short circuit load
14...switch
20...charge-discharge control device
21...discharge control FET
22...charge control FET
30, 30A, 30B...charge-discharge control circuit
40...charger
111A...first cell
111B...second cell
51A-53A, 51B-53B...over-discharge detection ladder resistor
54A-56A, 54B-56B...over-charge detection ladder resistor
62A...first logic circuit
62B...second logic circuit
81A, 81B...over-discharge detection comparator
82A, 82B...over-charge detection comparator

## Claims

1. A charge-discharge control circuit (30, 30A, 30B), comprising:
a battery (11) in which a plurality of cells including a first cell (111A) and a second cell (111B) are connected in series;
a first predetermined state detection part that detects a first predetermined state with respect to the first cell (111A);
a first logic circuit (62A) that performs a first control based on a detection result of the first predetermined state detection part;
a second predetermined state detection part that detects a second predetermined state with respect to the second cell (111B);
a charger connection detection part that detects presence or absence of connection between the battery (11) and a charger (40); and
a second logic circuit (62B) that performs a second control based on a detection result of the second predetermined state detection part, a detection result of the charger connection detection part, and a first notification from the first logic circuit (62A) regarding the first predetermined state,
wherein the first predetermined state and the second predetermined state are an over-charge state or an over-discharge state, and
the second logic circuit (62B) masks the first notification from the first logic circuit (62A) and performs the second control in response to the detection result of the charger connection detection part satisfying a predetermined condition.

2. The charge-discharge control circuit (30, 30A, 30B) according to claim 1, wherein the first predetermined state detection part includes a first ladder resistor, a first switch provided in parallel with the first ladder resistor, and a first comparator connected to one end of the first ladder resistor,
the first logic circuit (62A) controls on-off of the first switch based on an output from the first comparator,
the second predetermined state detection part includes a second ladder resistor, a second switch provided in parallel with the second ladder resistor, and a second comparator connected to one end of the second ladder resistor, and
the second logic circuit (62B) controls on-off of the second switch based on an output from the second comparator.

3. The charge-discharge control circuit (30, 30A, 30B) according to claim 1,
wherein the first predetermined state is an over-charge state, and
the predetermined condition includes a condition that the charger (40) is removed from the battery (11).

4. The charge-discharge control circuit (30, 30A, 30B) according to claim 1,
wherein the first predetermined state is an over-discharge state, and
the predetermined condition includes a condition that the charger (40) is connected to the battery (11).

5. The charge-discharge control circuit (30, 30A, 30B) according to claim 1,
wherein the first predetermined state is an over-charge state, and
the second control includes control to turn on a charge control FET (22) that performs charge control.

6. The charge-discharge control circuit (30, 30A, 30B) according to claim 1,
wherein the first predetermined state is an over-discharge state, and
the second control includes control to turn on a discharge control FET (21) that performs discharge control.

7. A charge-discharge control device (20), comprising:
a discharge control FET (21) that performs discharge control;
a charge control FET (22) that performs charge control; and
the charge-discharge control circuit (30, 30A, 30B) according to claim 1.

8. A battery device (10), comprising:
a battery (11); and
the charge-discharge control device (20) according to claim 7 that controls charge-discharge of the battery (11).
